(19) Europäisches Patentamt
European Patent Office
Office européen des brevets

(11) EP 2 889 326 B1

# (12) EUROPÄISCHE PATENTSCHRIFT

(45) Veröffentlichungstag und Bekanntmachung des Hinweises auf die Patenterteilung:
**14.09.2016 Patentblatt 2016/37**

(51) Int Cl.:
***C08K 5/13*** *(2006.01)*

(21) Anmeldenummer: **13199842.9**

(22) Anmeldetag: **30.12.2013**

(54) **Lagerstabile Nitrilkautschuke und Verfahren zu deren Herstellung**

Storage-stable nitrile rubbers and method for their preparation

Caoutchoucs nitriles stables au stockage et leur procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.07.2015 Patentblatt 2015/27**

(73) Patentinhaber: **ARLANXEO Deutschland GmbH**
**41540 Dormagen (DE)**

(72) Erfinder: **Obrecht, Werner**
**47447 Moers (DE)**

(74) Vertreter: **Wichmann, Birgid et al**
**LANXESS Deutschland GmbH**
**LEX-IPR**
**Kennedyplatz 1**
**50569 Köln (DE)**

(56) Entgegenhaltungen:
**DE-A1-102007 024 008** **DE-A1-102007 024 010**
**JP-A- 2007 191 555**

EP 2 889 326 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft neue phenol-haltige Nitrilkautschuke, ein Verfahren zu deren Herstellung, vulkanisierbare Mischungen enthaltend die neuen Nitrilkautschuke sowie daraus erhältliche Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril Monomeren, mindestens einem konjugierten Dien Monomeren und gegebenenfalls einem oder mehreren weiteren copolymerisierbaren Monomeren handelt.

Derartige Nitrilkautschuke und Verfahren zu deren Herstellung sind bekannt, siehe z.B. W. Hofmann, Rubber Chem. Technol. 36 (1963) 1 und Ullmann's Encyclopedia of Industrial Chemistry, VCH Verlagsgesellschaft, Weinheim, 1993, S. 255-261.

Nitrilkautschuke werden in den verschiedensten Anwendungsgebieten eingesetzt, beispielsweise für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus. Für diese Anwendungen werden Mischungen des Nitrilkautschuks mit verschiedenen Mischungsbestandteilen insbesondere mit Schwefel und mit Vulkanisationsbeschleunigern benötigt. Zur Vermeidung einer vorzeitigen Anvulkanisation bei der Mischungsherstellung müssen die Kautschukmischungen eine lange Scorchzeit aufweisen. Gleichzeitig dürfen die Lagerstabilität des Nitrilkautschuks, die Vulkanisationsgeschwindigkeit der Kautschkmischungen sowie die Eigenschaften der Vulkanisate, insbesondere des Modulniveaus bei 300% Dehnung nicht beeinträchtigt werden

NBR wird durch Emulsionspolymerisation hergestellt, wobei zunächst ein NBR-Latex erhalten wird. Der NBR-Feststoff wird aus diesem Latex durch Koagulation isoliert. Für die Koagulation werden Salze und Säuren verwendet. Über die Koagulation von Latices mit Metallsalzen ist bekannt, dass von einwertigen Metallionen, z.B. in Form von Natriumchlorid, deutlich größere Elektrolytmengen benötigt werden als von mehrwertigen Metallionen, z.B. in Form von Calciumchlorid, Magnesiumchlorid oder Aluminiumsulfat (Kolloid-Z. 154,154 (1957)). Es ist ferner bekannt, dass der Einsatz mehrwertiger Metallionen zu einem mehr oder weniger großen Einschluss des Emulgators im Produkt führt (Houben-Weyl (1961), Methoden der Org. Chemie, Makromolekulare Stoffe 1, S. 484). Gemäß Rouben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein. Schon geringe Reste von Elektrolyten ergeben trübe und wolkige Press- und Spritzstücke, verderben die elektrischen Eigenschaften und erhöhen das Wasseraufnahmevermögen des Fertigprodukts" (Zitat). Im Houben-Weyl findet sich kein Hinweis, wie ein Latex aufgearbeitet werden muss, um Nitrilkautschuke zu erhalten, die lagerstabil sind, schnell vulkanisieren und nach der Vulkanisation ein hohes Modulniveau und eine niedrige Wasserquellung aufweisen.

Das bisher erreichte Niveau der mechanischen Eigenschaften von Vulkanisaten des hydrierten Nitrilkautschuks insbesondere das Niveau von Modul und Compression Set ist noch nicht zufriedenstellend.

Gemäß US 2,281,613 werden zur Molekulargewichtsregelung bei der Emulsionspolymerisation von Butadien und Butadienderivaten sowie zur Copolymerisation von Butadien mit anderen Monomeren wie Acrylnitril alipahtische Mercaptane mit einer Kohlenstoffzahl >6, vorzugsweise 6-12 eingesetzt. Die Mercaptane werden im Verlauf der Polymerisation portionsweise oder kontinuierlich zugegeben. Auf diese Weise wird die Bildung von Gel bei der Polymerisation vermieden. In US 2,281,613 wird die Verwendung von Alterungsschutzmitteln nicht erwähnt. Daher können keine Maßnahmen zur Verbesserung des Modulniveaus und des Compression Sets von Vulkanisaten von Nitrilkautschuk durch ein Alterungsschutzmittel und seiner Menge abgeleitet werden.

Aus US 2,434,536 ist es bekannt, im Verlauf der als Emulsionspolymerisation durchgeführten Copolymerisation von Butadien und Acrylnitril Mercaptane mit 8 bis 16 C-Atomen portionsweise oder kontinuierlich zuzugeben, wobei am Anfang der Polymerisation Mercaptane mit hoher Molmasse und mit zunehmendem Monomerumsatz Mercaptane mit nierdrigerer Molmase zudosiert werden. Auf diese Weise wird die "Plastizität" und die "Mastizierbarkeit" und somit die Verarbeitbarkeit auf der Walze und im Banbury-Mischer von Kautschuken verbessert, die bei hohen Polymerisationsumsätzen erhalten werden. In US 2,434,536 wird die Verwendung von Alterungsschutzmitteln nicht erwähnt. Maßnahmen zur Verbesserung des Modulniveaus und des Compression Sets von Vulkanisaten des hydrierten Nitrilkautschuks durch das bei der Herstellung des Nitrilkautschuk-Feedstocks verwendete Alterungsschutzmittel und dessen Menge können aus US 2,434,536 nicht abgeleitet werden.

Aus GB 888040 ist ein Verfahren zur Koagulation von Nitrilkautschuk- und Polychloropren-Latices, die mit Emulgatoren auf Oleat-Basis hergestellt werden, bekannt. Zwecks Koagulation wird dem alkalischen Latex eine wässrige Lösung eines Ammoniumsalzes zugesetzt und anschließend erwärmt. Durch die hierbei stattfindende Reduktion des pH-Werts tritt die Koagulation des Latex ein. Aus dem Beispielteil geht hervor, dass dem Nitrilkautschuklatex vor der Koagulation 1,5 Teile von 2,2'-dihydroxy-3,3'-dicyclohexyl-5,5'-dimethyldiphenyl-methan zugesetzt werden. Auf der Basis von GB 888040 A können über den Einfluss von Alterungssschutzmitteln auf die Eigenschaften von Nitrilkautschuk Vulkanisaten keine weitergehenden Schlüsse gezogen werden. Insbesondere können keine Maßnahmen zur Verbesserung der Verarbeitungssicherheit, der Vulkanisationsgeschwindigkeit und des Modulniveaus ohne Einbußen in der Lagerstabilität abgeleitet werden.

Aus DD 154 702 ist ein Verfahren zur radikalischen Copolymerisation von Butadien und Acrylnitril in Emulsion bekannt, das über ein spezielles Dosierprogramm für die Monomere sowie den Molekulargewichtsregler, wie z.B. tert.-Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz-und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator reklamiert. Für die erhaltenen Butadien-Acrylnitril-Copolymerisate mit 10-30 Gew.% Acrylnitril wird ausgeführt, dass sie sich durch gute Elastizitäts- und Tieftemperatur-Eigenschaften kombiniert mit einer erhöhten Quellbeständigkeit und eine vorteilhafte Verarbeitbarkeit auszeichnen. In DD 154 702 werden keine Angaben über die Verwendung von Alterungsschutzmitteln gemacht. Entsprechend können aus DD 154 702 keine Anhaltspunkte über den Einfluss von Alterungsschutzmitteln auf die Lagerstabilität, die Verarbeitungssicherheit und die Vulkanisationsgeschwindigkeit von Kautschukmischungen sowie über den Einfluss von Alterungsschutzmittel auf die Eigenschaften unvulkanisierter Nitrilkautschuke abgeleitet werden.

Aus der DE-OS 23 32 096 ist bekannt, dass Kautschuke aus ihren wässrigen Dispersionen mit Hilfe von Methylcellulose und einem wasserlöslichen Alkali-, Erdalkali-, Aluminium- oder Zinksalz ausgefällt werden können. Als Vorteil dieses Verfahrens wird beschrieben, dass ein Koagulat erhalten wird, welches von Fremdbestandteilen, wie Emulgatoren, Katalysatorresten und dergleichen fast vollständig frei ist, da diese Fremdstoffe zusammen mit dem Wasser beim Abtrennen des Koagulats entfernt und etwa noch verbleibende Reste mit weiterem Wasser vollständig ausgewaschen werden. In der DE-OS 24 25 441 werden bei der Elektrolytkoagulation von Kautschuklatices als Hilfsmittel statt der Methylcellulose 0,1-10 Gew.% (bezogen auf den Kautschuk) wasserlösliche $C_2$-$C_4$ Alkylcellulosen oder Hydroxyalkylcellulosen in Kombination mit 0,02 bis 10 Gew.% (bezogen auf den Kautschuk) eines wasserlöslischen Alkali-, Erdalkali-, Aluminium- oder Zinksalzes verwendet. Auch hier wird als bevorzugtes wasserlösliches Salz Natriumchlorid eingesetzt. Das Koagulat wird mechanisch abgetrennt, gegebenenfalls mit Wasser gewaschen und das restliche Wasser entzogen. Auch hier wird ausgeführt, dass die Fremdstoffe wie in der DE-OS 23 32 096 zusammen mit dem Wasser beim Abtrennen des Koagulats faktisch vollständig entfernt werden und etwa noch verbleibende Reste durch das Waschen mit weiterem Wasser vollständig ausgewaschen werden. Es werden keine Angaben über die Restmengen der Verunreinigungen in diesen Nitrilkautschuken gemacht. Ferner finden sich weder in DE-OS 23 32 096 noch in DE-OS 24 25 441**.** Angaben über die Art und Menge von Alterungsschutzmitteln, die dem Nitrilkautschuklatex vor der Aufarbeitung zugesetzt werden. Daher können keine Lehren über die Abhängigkeit von Eigenschaften des Nitrilkautschuks von Art und Menge des Alterungsschutzmittel gezogen werden.

In DE-OS 27 51 786 wird festgestellt, dass die Ausfällung und Isolierung von Kautschuken aus ihren wässrigen Dispersionen mit einer geringeren Menge an **(Hydroxy)Alkylcellulose** durchgeführt werden kann, wenn 0,02 bis 0,25 Gew.% eines wasserlöslichen **Calciumsalzes** eingesetzt werden. Es wird wiederum als Vorteil beschrieben, dass nach diesem Verfahren ein extrem reines Koagulat erhalten wird, welches von Fremdbestandteilen, wie Emulgatoren, Katalysatoresten und dergleichen faktisch vollständig frei ist. Diese Fremdstoffe werden zusammen mit dem Wasser beim Abtrennen des Koagulats entfernt und etwa noch verbleibende Reste können mit Wasser ausgewaschen werden. Es wird ferner ausgeführt, dass die Eigenschaften der isolierten Kautschuke nicht nachteilig dadurch beeinflusst werden, dass mit einem Calcium-Salz koaguliert wird. Man erhalte vielmehr einen Kautschuk, bei dem die Vulkanisateigenschaften nicht beeinträchtigt und voll zufriedenstellend seien. Dies wird als überraschend dargestellt, da eine Beeinträchtigung der Kautschukeigenschaften häufig zu beobachten sei, wenn Polymere aus Dispersionen mit Hilfe mehrwertiger Metallionen wie Calcium- oder Aluminium-Ionen ausgefällt würden. Die Kautschuke der DE-OS 27 51 786 wiesen keinerlei Verzögerung oder Verschlechterung z.B. bei der Anvulkanisation und/oder Ausvulkanisation auf. Es werden keine Angaben über die Art und Menge von Alterungsschutzmitteln, die dem Nitrilkautschuklatex vor der Aufarbeitung zugesetzt werden sowie über den Einfluss dieser Alterungsschutzmittel auf die Eigenschaften von hieraus hergestelltem Nitrilkautschuk und dessen Vulkanisate gemacht.

Wie bei den zuvor beschriebenen Patenten ist es auch das Ziel der DE-OS 30 43 688**,** die für die Latexkoagulation nötigen Elektrolytmengen möglichst stark zu reduzieren. Hierfür verwendet man bei der Elektrolytkoagulation von Latices neben dem anorganischen Coagulans als Hilfsmittel entweder auf Pflanzen zurückgehende proteinartige Materialien oder Polysaccharide wie z.B. Stärke und gegebenenfalls wasserlösliche Polyaminverbindungen. Als anorganische Coagulantien werden bevorzugt Alkali- oder Erdalkalimetallsalze beschrieben. Durch die speziellen Additive gelingt eine Reduktion der für eine quantitative Latexkoagulation notwendigen Salzmengen. Angaben über die Art und Menge von Alterungsschutzmitteln, die dem Nitrilkautschuklatex vor der Aufarbeitung zugesetzt werden sowie über den Einfluss dieser Alterungsschutzmittel auf die Eigenschaften von Nitrilkautschuk und dessen Vulkanisate finden sich nicht.

Gemäß US-A-2,487,263 wird die Latexkoagulation von Styrol/Butadien-Kautschuken nicht unter Einsatz von Metallsalzen durchgeführt, sondern mit Hilfe einer Kombination von Schwefelsäure mit Gelatine ("glue"). Menge und

Konzentration der Schwefelsäure sind dabei so zu wählen, dass der pH des wässrigen Mediums auf einen Wert < 6 eingestellt wird. Bei der Latexkoagulation bilden sich diskrete, nicht zusammenhängende Kautschukkrümel, die gut abfiltrierbar und waschbar sind. Der so erhaltene Styrol/Butadien-Kautschuk weist ein geringeres Wasserabsorptionsvermögen, einen niedrigeren Aschegehalt und einen höheren elektrischen Widerstand als Kautschuke auf, die mit Hilfe von Salzen ohne Gelatinezusatz koaguliert werden. Ob und welche Auswirkungen die Koagulation mit Schwefelsäure unter Gelatinezusatz auf Lagerstabilität, Vulkanisationsgeschwindigkeit und Vulkanisateigenschaften und insbesondere auf das Modulniveau von Kautschuken hat, wird nicht offenbart. Auf eine Verwendung von Alterungsschutzmitteln wird ebenfalls nicht eingegangen.

US-A-4,383,108 beschreibt die Herstellung eines Nitrilkautschuk durch Emulsionspolymerisation unter Verwendung von Natriumlaurylsulfat als Emulgator. Der hierbei erhaltene Latex wird durch eine wässrige Lösung von Magnesium- und Aluminiumsulfat im Molverhältnis Magnesium/Aluminium 0,3/1 bis 2/1 koaguliert. Hierbei wird der Nitrilkautschuk in der Form eines Pulvers mit Teilchendurchmessern im Bereich 0,3 bis 4 mm erhalten, das vor der Trocknung gegebenenfalls mit Zinkseifen als Antiagglomeratinsmittel versetzt wird. Dem Beispielteil von US-A-4,383,108 ist zu entnehmen, dass der Latex vor der Koagulation durch Zusatz von 1,5 Gew.-Teilen eines "Phosphits von Polyalkylphenol" stabilisiert wird. Angaben über den Einfluss des Alterungsschutzmittels auf Eigenschaften von Nitrilkautschuk wie Lagerstabilität, Verarbeitungssicherheit, Vulkanisationsgeschwindigkeit und Modulniveau bei 300 % Dehnung finden sich nicht.

US-A-5,708,132 beschreibt die Herstellung lagerstabiler und rasch vulkanisierender Nitrilkautschuke, wobei der Nitrilkautschuklatex vor der Koagulation mit einem Gemisch eines hydrolyseanfälligen und eines hydrolysebeständigen Alterungsschutzmittels versetzt wird. Als hydrolyseanfälliges Alterungsschutzmittel werden alkylierte Arylphosphite insbesondere Tris(nonylphenyl)phosphit eingesetzt. Als hydrolysebeständige Alterungsschutzmittel werden sterisch gehinderte Phenole, insbesondere Octadecyl-3,5-di-t.butyl-4-hydroxyhydro cinnemate (Ultranox® 276) genannt. Durch die Kombination der zwei Alterungsschutzmittel wird die Hydrolysegeschwindigkeit des Alterungsschutzmittels auf Phosphitbasis reduziert. Der allgemeinen Beschreibung von US-A-5,708,132 ist zu entnehmen, dass die Summe der Alterungsschutzmittel 0,25 bis 3 Gew.-Teilen bezogen auf 100 Gew.-Teile Kautschuk beträgt. Es wird gezeigt, dass der pH-Wert der Krümeldispersion nach der Koagulation einen großen Einfluss auf die Lagerstabilität des Nitrilkautschuks und auf die Vulkanisationsgeschwindigkeit einer Nitrilkautschukmischung hat. In US 5,708,132 bleibt offen, welche Gehalte an Alterungsschutzmitteln nach der Trocknung im Nitrilkautschuk verbleiben und welche Gehalte an Alterungsschutzmittel einzustellen sind, damit Nitrilkautschuke mit guter Lagerstabilität erhalten werden, deren Kautschukmischungen bei hoher Scorchbeständigkeit eine rasche Vulkanisationsgeschwindigkeit und im vulkanisierten Zustand hohe Modulwerte bei 300% Dehnung aufweisen.

In der US-A-4,920,176 wird offenbart, dass bei Koagulation eines Nitrilkautschuk-Latex gemäß dem Stand der Technik unter Einsatz anorganischer Salze wie NaCl oder $CaCl_2$ sehr hohe Natrium-, Kalium- und Calcium-Gehalte und auch deutliche Mengen an Emulgator im Nitrilkautschuk verbleiben. Zwecks Erhalt eines möglichst reinen Nitrilkautschuks werden gemäß US-A-4,920,176 bei der Koagulation des Nitrilkautschuk-Latex anstelle der anorganischen Salze wasserlösliche kationische Polymere eingesetzt. Bei diesen handelt es sich beispielsweise um solche auf der Basis von Epichlorhydrin und Dimethylamin. Die daraus erhaltenen Vulkanisate weisen eine niedrigere Quellung bei Wasserlagerung sowie einen höheren elektrischen Widerstand auf. Diese Eigenschaftsverbesserungen werden rein qualitativ auf die minimalen, im Produkt verbleibenden Kationengehalte zurückgeführt. In US-A-4,920,176 werden Alterungsschutzmittel wie phenolische Alterungsschutzmittel sowie 2,6-Di-tert.-Butyl-p-kresol explizit genannt. Die Alterungsschutzmittel werden vor der Latexkoagulation in den Latex gegeben, wobei konkrete Mengenangaben fehlen. Aus der Lehre von US-A-4,920,176 kann keine Anleitung zur Herstellung eines Nitrilkautschuks abgeleitet werden, der bei guter Lagerstabilität eine hohe Verarbeitungssicherheit der Kautschukmischungen bei rascher Vulkanisationsgeschwindigkeit und hohem Niveau des Moduls bei 300% Dehnung aufweist.

Das Ziel der EP-A-1 369 436 bestand darin, Nitrilkautschuke hoher Reinheit bereitzustellen. Die Emulsionspolymerisation in Gegenwart von Fettsäure- und/oder Harzsäuresalzen als Emulgatoren durchgeführt und danach die Latexkoagulation durch Zusatz von mineralischen oder organischen Säuren bei pH Werten kleiner gleich 6 vorgenommen, gegebenenfalls unter Zugabe von Fällungsmitteln. Als zusätzliche Fällungsmittel können Alkalisalze von anorganischen Säuren eingesetzt werden. Auch Fällungshilfsmittel wie Gelatine, Polyvinylalkohol, Cellulose, carboxylierte Cellulose und kationische sowie anionische Polyelektrolyte oder deren Mischungen können zugesetzt werden. Anschließend werden die dabei entstandenen Fett- und Harzsäuren mit wässrigen Alkalihydroxidlösungen ausgewaschen und das Polymer einer Scherung unterworfen, bis sich eine Restfeuchte von kleiner gleich 20 % einstellt. Erhalten werden Nitrilkautschuke mit geringen Restemulgatorgehalten sowie Kationengehalten. Hinweise zur gezielten Herstellung von Nitrilkautschuken mit bestimmten technologischen Eigenschaften fehlen. Hinweise zur gezielten Herstellung von Nitrilkautschuken mit bestimmten technologischen Eigenschaften fehlen. Der Einfluss von Alterungsschutzmitteln auf die Produkteigenschaften wie Lagerstabilität, Verarbeitungssicherheit und Vulkanisationsgeschwindigkeit von Kautschukmischungen wird nicht untersucht.

In US-A-4,965,323 wird der Compression Set von HNBR basierten Vulkanisaten, die durch peroxidische oder

durch Schwefelvulkanisation erhalten werden, dadurch verbessert, dass der Nitrilkautschuk nach der Polymerisation oder nach der Hydrierung mit einer wässriger Alkalilösung oder der wässrigen Lösung eines Amins in Kontakt gebracht wird. Im Beispiel 1 werden Kautschukkrümel, die nach Entfernung des Lösungsmittels erhalten werden, in einem separaten Verfahrensschritt mit wässrigen Sodalösungen unterschiedlicher Konzentration gewaschen. Als Maß für den Alkaligehalt wird der pH-Wert einer wässrigen THF-Lösung herangezogen, die man erhält, indem man 3 g des Kautschuks in 100 ml THF löst und unter Rühren 1 ml Wasser zugibt. Der pH-Wert wird mittels einer Glaselektrode bei 20°C bestimmt. Für die Herstellung von Vulkanisaten des hydrierten Nitrilkautschuks mit niedrigem Compression Set soll der pH-Wert der wässrigen THF-Lösung > 5, bevorzugt > 5,5, besonders bevorzugt > 6 sein. In US 4,965,323 finden sich keine Hinweise auf die Art und Menge des Alterungsschutzmittels, das bei der Herstellung des Nitrilkautschuks einzusetzen ist.

In EP-A-0 692 496, EP-A-0 779 301 und EP-A-0 779 300 werden jeweils Nitrilkautschuke auf Basis eines ungesättigten Nitrils und eines konjugierten Diens beschrieben, die 10-60 Gew.% ungesättigtes Nitril besitzen sowie eine Mooney-Viskosität (ML 1+4 @ 100°C) im Bereich von 15-150 bzw. gemäß EP-A-0 692 496 von 15-65 Mooney Einheiten und die alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist. Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Im Hinblick auf die Latex-Koagulation wird jeweils ausgeführt, dass beliebige Coagulantien eingesetzt werden können. Als anorganische Coagulantien werden Calciumchlorid und Aluminiumchlorid erwähnt und eingesetzt. Gemäß EP-A-0 779 301 **und** EP-A-0 779 300 besteht eine bevorzugte Ausführungsform in einem Nitrilkautschuk, der im wesentlichen halogenfrei ist und erhalten wird, indem die Latex-Koagulation in Gegenwart eines nichtionischen oberflächenaktiven Hilfsmittels und unter Verwendung von halogen-freien Metallsalzen wie Aluminiumsulfat, Magnesiumsulfat und Natriumsulfat durchgeführt wird. Als bevorzugt wird die Koagulation unter Einsatz von Aluminiumsulfat oder Magnesiumsulfat angegeben, um den im Wesentlichen halogenfreien Nitrilkautschuk zu erhalten. Der in den Beispielen auf diesem Weg hergestellte Nitrilkautschuk besitzt einen Halogengehalt von maximal 3 ppm. Für die Herstellung der Nitrilkautschuke ist es essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Es wird darauf hingewiesen, dass bei Einsatz von herkömmlichem tert. Dodecylmercaptan als Regler Nitrilkautschuke mit schlechteren Eigenschaften erhalten werden.

Für so hergestellten Nitrilkautschuke wird geltend gemacht, dass sie ein vorteilhaftes Eigenschaftsprofil besitzen, eine gute Verarbeitbarkeit der Kautschukmischungen und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen. Geltend gemacht wird ferner, dass die Nitrilkautschuke eine kurze Anvulkanisationszeit aufweisen, eine hohe Vernetzungsdichte erreichbar ist und die Vulkanisationsgeschwindigkeit hoch, insbesondere bei NBR-Typen für die Spritzguss-verarbeitung.

Bezüglich der Verwendung von Alterungsschutzmitteln wird in den Beschreibungen von EP-A-0 692 496, EP-A-0 779 301 und EP-A-0 779 300 nichts gesagt. Aus den Beispielen geht hervor, dass als Alterungsschutzmittel ein alkyliertes Phenol, das in der chemischen Struktur nicht weiter definiert wird, Verwendung findet. Ferner kann den Beispielen entnommen werden, dass von dem alkylierten Phenol 2 Teile eingesetzt werden. Es ist zu vermuten, dass es sich hierbei um Gewichts-Teile handelt. Offen bleibt die Bezugsgröße (bezogen auf Monomer oder Polymer). Über den Einfluss des im trockenen Nitrilkautschuk verbleibenden alkylierten Phenols auf die Eigenschaften von Nitrilkautschuk und von hydrierten Nitrilkautschuk sowie seiner Kautschukmischungen und Vulkanisate können aus EP-A-0 692 496, EP-A-0 779 301 und EP-A-0 779 300 keine weitergehenden Schlüsse gezogen werden.

In der DE 102007024011 A wird ein schnell vulkanisierender Nitrilkautschuk mit guten mechanischen Eigenschaften, insbesondere einem hohen Modul 300-Niveau, beschrieben, der eine Ionenkennzahl ("IKZ") der allgemeinen Formel (I) im Bereich von 7-26 ppm x mol/g besitzt.

$$\text{Ionenkennzahl} = \frac{3\,c\,(Ca^{2+})}{40\ g/mol} - \left[\frac{c\,(Na^{+})}{23\ g/mol} + \frac{c\,(K^{+})}{39\ g/mol}\right] \qquad (I)$$

wobei $c(Ca^{2+})$, $c(Na^{+})$ und $c(K^{+})$ die Konzentration der Calcium-, Natrium- und Kalium-Ionen im Nitrilkautschuk in ppm angibt. Um einen solchen schnell vulkanisierenden Nitrilkautschuk zu erhalten, wird die Koagulation in Gegenwart eines Salzes eines 1-wertigen Metalls und optional maximal 5 Gew.% eines Salzes eines 2-wertigen Metalls durchgeführt und die Temperatur bei Koagulation und nachfolgender Wäsche beträgt mindestens 50°C. Im allgemeinen Teil von DE 102007024011 werden einige Alterungsschutzmitteln aufgezählt, die dem Nitrilkautschuklatex vor der Koagulation zugesetzt werden, wobei Mengenangaben fehlen. Aus dem Beispielteil geht hervor, dass die Untersuchungen mit einer konstanten Menge an Di-tert.butyl-p-kresol (1,25 Gew. % bezogen auf Festkautschuk) durchgeführt wurden. Über den Einfluss des im trockenen Nitrilkautschuk verbleibenden 2,5-Di-tert.butyl-p-kresols auf die Eigenschaften von Nitrilkautschuk sowie seiner Kautschukmischungen und Vulkanisate können aus DE 102007024011 A keine weitergehenden Schlüsse gezogen werden.

In der DE 102007024008 A wird ein besonders lagerstabiler Nitrilkautschuk beschrieben, der spezielle isomere $C_{16}$-Thiolgruppen enthält und einen Calcium-Ionen-Gehalt von mindestens 150 ppm sowie einen Chlor-Gehalt von mindestens 40 ppm, jeweils bezogen auf den Nitrilkautschuk, aufweist. Die Ca-Ionen-Gehalte der in den erfindungsgemäßen Beispielen hergestellten Nitrilkautschuke betragen 171 -1930 ppm, die Mg-Gehalte liegen bei 2- 265 ppm. Die Ca-Ionen-Gehalte der nicht erfindungsgemäßen Vergleichsbeispiele betragen 2-25 ppm, die Mg-Ionen-Gehalte 225-350 ppm. Ein solcher lagerstabiler Nitrilkautschuk wird erhalten, wenn man die Latex-Koagulation in Gegenwart mindestens eines Salzes auf Basis von Aluminium, Calcium, Magnesium, Kalium, Natrium oder Lithium durchführt, Koagulation oder Wäsche in Gegenwart eines Ca-Salzes oder von Ca-Ionen haltigem Waschwasser und in Gegenwart eines Cl-haltigen Salzes durchführt. Die Chlorgehalte der erfindungsgemäßen Beispiele liegen im Bereich **49 bis 970** ppm und die der nicht erfindungsgemäßen Vergleichsbeispiele im Bereich **25 bis 39 ppm.** Die niedrigeren Chlorgehalte mit 25 bis 30 ppm werden jedoch nur dann erhalten, wenn mit chloridfreien Fällmitteln wie Magnesiumsulfat, Aluminiumsulfat oder Kaliumaluminiumsulfat koaguliert wird und anschließend mit deionisiertem Wasser gewaschen wird. Im allgemeinen Teil von DE 102007024008 werden eine Reihe von Alterungsschutzmitteln aufgezählt, die dem Nitrilkautschuklatex vor der Koagulation zugesetzt werden, wobei im allgemeinen Teil Mengenangaben fehlen. Aus den Beispielen von DE 102007024008 geht hervor, dass die bei den Untersuchungen eingesetzten NBR-Latices jeweils mit 1,25 Gew.% 2,6-Di-tert.butyl-p-kresol bezogen auf Festkautschuk stabilisiert wurden; die eingesetzten Mengen an 2,6-Di-tert.butyl-p-kresol wurden bei den Untersuchungen nicht variiert. Aus DE 102007024008 können daher keine weitergehenden Schlüsse über den Einfluss des im trockenen Nitrilkautschuk verbleibenden 2,5-Di-tert.butyl-p-kresols auf die Eigenschaften von Nitrilkautschuk sowie seiner Kautschukmischungen und Vulkanisate gezoge werden.

In der DE 102007024010 wird ein weiterer schnell vulkanisierender Nitrilkautschuk beschrieben, der eine Ionenkennzahl ("IKZ") der allgemeinen Formel (I) im Bereich von 0 - 60, bevorzugt 10 - 25 ppm x mol/g aufweist,

$$IKZ = 3\left[\frac{c(Ca^{2+})}{40\ g/mol} + \frac{c(Mg^{2+})}{24\ g/mol}\right] - \left[\frac{c(Na^{+})}{23\ g/mol} + \frac{c(K^{+})}{39\ g/mol}\right] \quad (I)$$

wobei $c(Ca^{2+})$, $c(Mg^{2+})$, $c(Na^{+})$ und $c(K^{+})$ die Konzentration der Calcium-, Magnesium-, Natrium- und Kalium-Ionen im Nitrilkautschuk in ppm angibt, und der Mg-Ionen-Gehalt bei 50-250 ppm bezogen auf den Nitrilkautschuk liegt. Bei den Beispielen für die erfindungsgemäß hergestellten Nitrilkautschuke liegt der Ca-Ionen-Gehalt $c(Ca^{2+})$ im Bereich von 163 - 575 ppm und der Mg-Ionen-Gehalt $c(Mg^{2+})$ im Bereich von 57 - 64 ppm. Bei den Beispielen für nicht erfindungsgemäße Nitrilkautschuke liegt der Ca-Ionen-Gehalt $c(Ca^{2+})$ im Bereich von 345 - 1290 ppm und der Mg-Ionen-Gehalt $c(Mg^{2+})$ im Bereich von 2 - 440 ppm. Derartige Nitrilkautschuke erhält man, wenn die Latexkoagulation unter Einhaltung besonderer Maßnahmen durchführt und der Latex vor der Koagulation mit einem Magnesium-Salz auf eine Temperatur von kleiner 45°C eingestellt wird. Im allgemeinen Teil von DE 102007024010 werden eine Reihe von Alterungsschutzmitteln aufgezählt, die dem Nitrilkautschuklatex vor der Koagulation zugesetzt werden, wobei im allgemeinen Teil Mengenangaben fehlen. Aus dem Beispielteil geht hervor, dass die Untersuchungen mit einer konstanten Menge an Di-tert.butyl-p-kresol (1,25 Gew. % bezogen auf Festkautschuk) durchgeführt wurden. Über den Einfluss des im trockenen Nitrilkautschuk verbleibenden 2,5-Di-tert.butyl-p-kresols auf die Eigenschaften von Nitrilkautschuk sowie seiner Kautschukmischungen und Vulkanisate können aus DE 102007024010 keine weitergehenden Schlüsse gezogen werden.

In EP 2 238 177 *w*ird die Herstellung von Nitrilkautschk mit hoher Lagerstabilität beschrieben, indem die Latexkoagulation mit **Erdalkalisalzen in Kombination mit Gelatine** durchgeführt wird. Die Nitrilkautschuke weisen eine besondere Kennzahl bezüglich der im Nitirlkautschuk enthaltenen Gehalte an Natrium-, Kalium, Magnesium- und Calciumionen auf (Ionenkennzahl). Im allgemeinen Teil von EP 2 238 177 werden eine Reihe von Alterungsschutzmitteln aufgezählt, die dem Nitrilkautschuklatex vor der Koagulation zugesetzt werden, wobei im allgemeinen Teil Mengenangaben fehlen. Aus dem Beispielteil geht hervor, dass die Untersuchungen mit 2,2-Methylen-bis-(4-methyl-6-tert.butylphenol) durchgeführt wurden, dessen Menge in einem Bereich von 0,1 bis 0,8 Gew. % bezogen auf Festkautschuk variiert wurde. In EP 2 238 177 wird gezeigt, dass die Lagerstabilitäten des Nitrilkautschuks nicht von der Menge an 2,2-Methylen-bis-(4-methyl-6-tert.butylphenol) abhängen und dass selbst bei Einsatz der niedrigsten Menge (0,1 Gew. %) an 2,2-Methylen-bis-(4-methyl-6-tert.butylphenol) ausreichende Lagerstabilitäten erzielt werden. Aufgrund der in EP 2 238 177 offenbarten Daten kann der Schluss gezogen werden, dass die Menge an 2,2-Methylen-bis-(4-methyl-6-tert.butylphenol) nur einen untergeordneten Einfluss (wenn überhaupt) auf die Eigenschaften von Nitrilkautschuk sowie seiner Kautschukmischungen und Vulkanisate hat.

In EP 2 238 175 A werden Nitrilkautschke mit hoher Lagerstabilität beschrieben, die durch Latexkoagulation mit **Alkalisalzen in Kombination mit Gelatine** sowie durch spezielle Bedingungen bei der Latexkoagulation und der anschließenden Krümelwäsche erhalten werden. Die Nitrilkautschuke weisen besondere Kennzahlen bezüglich der im Nitirlkautschuk verbleibenden Mengen an Natrium-, Kalium, Magnesium- und Calciumionen (Ionenketmzahlen) auf. Im allgemeinen Teil werden eine Reihe von Alterungsschutzmitteln aufgezählt, die dem Nitrilkautschuklatex vor der Koagulation zugesetzt werden, wobei detaillierte Mengenangaben fehlen. Aus dem Beispielteil geht hervor, dass die Untersuchungen mit einer konstanten Menge an 2,6-Di-tert.butyl-p-kresol (1,0 Gew. % bezogen auf Festkautschuk) durchgeführt wurden. Über den Einfluss des im trockenen Nitrilkautschuk verbleibenden 2,5-Di-tert.butyl-p-kresols auf die Eigenschaften von Nitrilkautschuk sowie seiner Kautschukmischungen und Vulkanisate können aus EP 2 238 175 A keine weitergehenden Schlüsse gezogen werden.

In EP 2 238 176 A werden Nitrilkautschke mit hoher Lagerstabilität beschrieben, die durch Latexkoagulation mit **Erdalkalisalzen in Kombination mit Polyvinylalkohol** erhalten werden. Die Nitrilkautschuke weisen besondere Gehalte bezüglich der im Nitirlkautschuk verbleibenden Gehalte an Natrium-, Kalium, Magnesium- und Calciumionen auf (Ionenkennzahl). Im allgemeinen Teil von EP 2 238 176 A werden eine Reihe von Alterungsschutzmitteln aufgezählt, die dem Nitrilkautschuklatex vor der Koagulation zugesetzt werden, wobei detaillierte Mengenangaben fehlen. Aus dem Beispielteil geht hervor, dass die Untersuchungen mit einer konstanten Menge an 2,6-Di-tert.butyl-p-kresol (1,0 Gew. % bezogen auf Festkautschuk) durchgeführt wurden. Über den Einfluss des im trockenen Nitrilkautschuk verbleibenden 2,6-Di-tert.butyl-p-kresol auf die Eigenschaften von Nitrilkautschuk, dessen Mischungen und Vulkanisate können keine Schlüsse gezogen werden.

EP 1 331 074 A beschreibt die Herstellung von Mischungen auf der Basis nitrilhaltiger Kautschuke mit verringerter Neigung zur Formverschmutzung im Spritzgussverfahren. Die Aufgabe wird gelöst durch Nitrilkautschuk oder hydrierten Nitrilkautschuk mit einem Fettsäuresäuregehalt im Bereich von 0,1-0,5 Gew. %. Untersucht wird der Einfluss verschiedener Mischungsbestandteile auf das Formverschmutzungsverhalten, u.a. von Di-tert.butyl-p-kresol, das in Mengen von 0,1-0,5 Gew.-Teilen variiert wird. In EP 1331074 A finden sich weder Angaben über die im Nitrilkautschuk bzw. im hydrierten Nitrilkautschuk vorliegenden bzw. verbleibenden Gehalte an 2,5-Di-tert.butyl-p-kresol noch über dessen Einfluss auf die Eigenschaften von Nitrilkautschuk, Nitrilkautschukmischungen und Nitrilkautschukvulkanisaten.

**Zusammenfassend** ist festzustellen, dass trotz umfangreicher Literatur über Nitrilkautschuk bis heute nichts über den Einfluss von Art und Menge des nach der Trocknung im Nitrilkautschuk verbleibenden Alterungsschutzmittels bekannt geworden ist. Insbesondere gibt es keine Angaben über einen Nitrilkautschuk, der ein Alterungsschutzmittel in einer solchen Menge enthält, dass der Nitrilkautschuk einerseits lagerstabil ist und dass andrerseits seine Kautschukmischungen bei hoher Verarbeitungssicherheit gleichzeitig eine hohe Vulkanisationsgeschwindigkeit aufweisen und dass die Vulkanisate sehr gute mechanische Eigenschaften aufweisen.

Die **Aufgabe der vorliegenden Erfindung** bestand somit darin, einen lagerstabilen Nitrilkautschuk bereitzustellen, dessen Kautschukmischungen gleichzeitig eine hohe Verarbeitungssicherheit und eine hohe Vulkanisationsgeschwindigkeit aufweisen und der im vulkanisierten Zustand zusätzlich ein verbessertes Niveau des Spannungswerts bei 300% Dehnung sowie eine sehr gute Bruchdehnung besitzt.

**Es wurde überraschenderweise gefunden,** dass ein Nitrilkautschuk mit o.g. Eigenschaftsprofil dadurch erhalten wird, wenn dieser ein spezielles substituiertes Phenol in einer bestimmten Menge enthält. Zugänglich wird dieser neue Nitrilkautschuk mit dem gewünschten Eigenschaftsprofil, indem man den Nitrilkautschuk nach seiner Herstellung durch Emulsionspolymerisation und vor der Aufarbeitung mit dem entsprechenden speziellen substituierten Phenol in einer bestimmten Menge versieht und dann unter Trocknung, bevorzugt unter Einsatz eines Fliessbett-Trockners isoliert.

**Gegenstand der vorliegenden Erfindung** ist somit ein **Nitrilkautschuk** enthaltend mindestens ein substituiertes Phenol der allgemeinen Formel (I) in einer Menge im Bereich von 0,25 bis < 0,9 Gew.%, bevorzugt von 0,3 bis 0,85 Gew.%, besonders bevorzugt von 0,4 Gew.% bis 0,85 Gew. %, jeweils bezogen auf den Nitrilkautschuk,

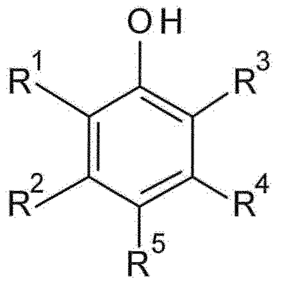

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff-Rest mit 1 bis 8 C-Atomen und zusätzlich einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist.

**Gegenstand der vorliegenden Erfindung** sind ferner **vulkanisierbare Mischungen** dieser erfindungsgemäßen Nitrilkautschuke sowie **Verfahren zur Herstellung darauf basierender Vulkanisate** sowie die dabei erhältlichen **Vulkanisate,** insbesondere als Formkörper.

**Gegenstand der vorliegenden Erfindung** ist ferner ein **Verfahren zur Herstellung dieser erfindungsgemäßen Nitrilkautschuke** enthaltend mindestens ein substituiertes Phenol der allgemeinen Formel (I) in einer Menge im Bereich von 0,25 bis < 0,9 Gew.%, bevorzugt von 0,3 bis 0,85 Gew.%, besonders bevorzugt von 0,4 Gew.% bis 0,85 Gew. %, bezogen auf den Nitrilkautschuk dadurch gekennzeichnet, dass man

(1) den Nitrilkautschuk durch Emulsionspolymerisation mindestens eines konjugierten Diens, mindestens eines $\alpha,\beta$ ungesättigten Nitrils und keinem, einem oder mehreren weiteren copolymerisierbaren Monomeren herstellt,
(2) die resultierende Suspension des Nitrilkautschuks im wässrigen Medium mit mindestens einem substituierten Phenol der allgemeinen Formel (I) versetzt, bevorzugt in einer Menge im Bereich von 0,9 bis 1,6 Gew.%, bezogen auf den Nitrilkautschuk

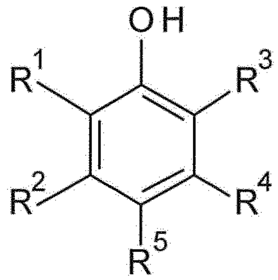

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff-Rest mit 1 bis 8 C-Atomen und zusätzlich mit einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist, und

(3) der Nitrilkautschuk koaguliert, isoliert und getrocknet wird,
**dadurch gekennzeichnet, dass** die Trocknung bei einer Temperatur im Bereich von 100 bis 180°C, vorzugsweise bei 110 bis 150°C durchgeführt wird und der Gehalt an substituiertem Phenol der allgemeinen Formel (I) auf die Menge im Bereich von 0,25 bis < 0,9 Gew.%, bevorzugt von 0,3 bis 0,85 Gew.%, besonders bevorzugt 0,4 Gew.% bis 0,85 Gew.% bezogen auf den Nitrilkautschuk eingestellt wird.

Der erfindungsgemäße Kautschuk zeichnet sich dadurch aus, dass darauf basierende vulkanisierbare Mischungen eine verbesserte Verarbeitungssicherheit in Form einer verlängerte Anvulkanisationszeit ("Mooney Scorch") aufweisen, die mit Hilfe eines Scherscheibenviskosimeters nach DIN 53 523 bei 120°C bestimmt wird. Gleichzeitig zeigen die auf dem erfindungsgemäßen Nitrilkautschuk basierenden vulkanisierbare Mischungen eine höhere Vulkanisationsgeschwindigkeit ($t_{90}$-$t_{10}$) sowie im vulkanisierten Zustand einen verbesserten Modulwert bei 300% Dehnung sowie Bruchdehnung $\varepsilon_B$. Die Normen, nach denen die angegebenen Eigenschaften gemessen werden, sind im Beispielsteil dieser Anmeldung aufgelistet.

## Erfindungsgemäße Nitrilkautschuke:

Der erfindungsgemäße Nitrilkautschuk enthält mindestens ein substituiertes Phenol der allgemeinen Formel (I),

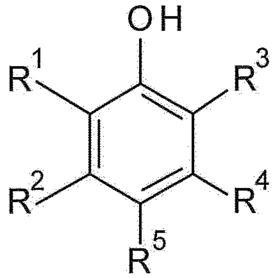

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff-Rest mit 1 bis 8 C-Atomen und zusätzlich mit einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist,

in einer Menge im Bereich von 0,25 bis < 0,9 Gew.%, bevorzugt von 0,3 bis 0,85 Gew.%, besonders bevorzugt 0,4 Gew.% bis 0,85 Gew.% bezogen auf den Nitrilkautschuk

Vorzugsweise enthält der erfindungsgemäßen Nitrilkautschuks substituierte Phenole der allgemeinen Formel (I), worin

$R^1$, $R^2$, $R^3$, $R^4$ und $R^5$ gleich oder verschieden sind und Wasserstoff, Hydroxy, einen linearen oder verzweigten $C_1$-$C_8$ Alkylrest, besonders bevorzugt Methyl, Ethyl, Propyl, n-Butyl oder t-Butyl, einen linearen oder verzweigten $C_1$-$C_8$ Alkoxyrest, besonders bevorzugt Methoxy, Ethoxy oder Propoxy, einen $C_3$-$C_8$ Cycloalkylrest, besonders bevorzugt Cyclopentyl oder Cyclohexyl, oder einen Phenylrest darstellen, wobei mindestens einer der Reste $R^1$, $R^2$, $R^3$, $R^4$ und $R^5$ ungleich Wasserstoff ist.

Insbesondere bevorzugt werden für die Stabilisierung des erfindungsgemäßen Nitrilkautschuks substituierte Phenole der allgemeine Formel (I) eingesetzt, worin zwei oder drei der Reste $R^1$, $R^2$, $R^3$, $R^4$ und $R^5$ Wasserstoff bedeuten und die übrigen drei bzw. zwei der Reste $R^1$, $R^2$, $R^3$, $R^4$ und $R^5$ gleich oder verschieden sind und Hydroxy, einen linearen oder verzweigten $C_1$-$C_8$ Alkylrest, besonders bevorzugt Methyl, Ethyl, Propyl, n-Butyl oder t-Butyl, einen linearen oder verzweigten $C_1$-$C_8$ Alkoxyrest, besonders bevorzugt Methoxy, Ethoxy oder Propoxy, einen $C_3$-$C_8$ Cycloalkylrest, besonders bevorzugt Cyclopentyl oder Cyclohexyl, oder einen Phenylrest darstellen.

Ganz besonders bevorzugt können substituierte Phenole der allgemeinen Formel (I) ausgewählt aus der Gruppe bestehend aus den im Folgenden genannten Verbindungen eingesetzt werden:

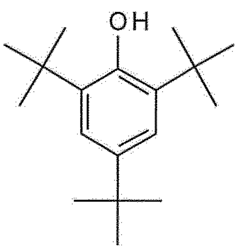 , 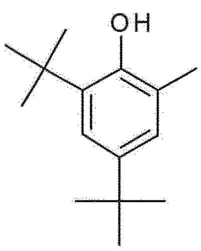 , 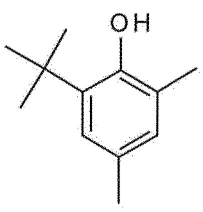 , 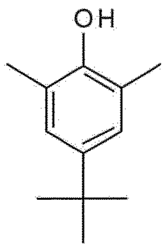 , 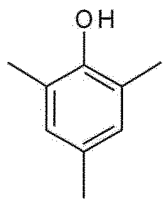 ,

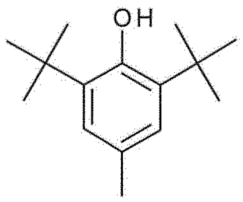 , 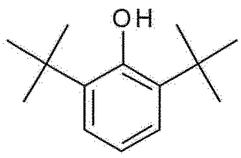 , 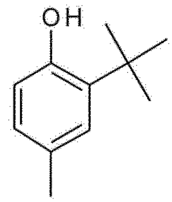 , 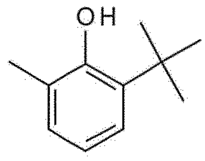 , 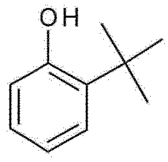 ,

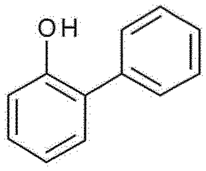 , 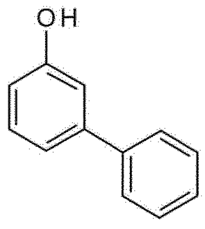 , 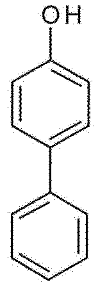 ,

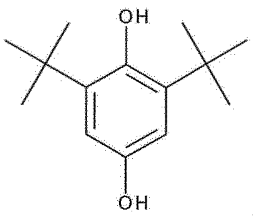 , 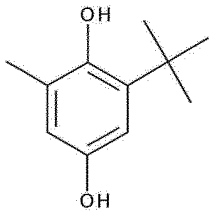 , 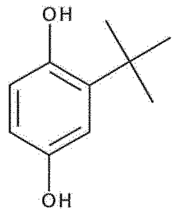 , 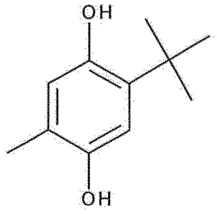 , 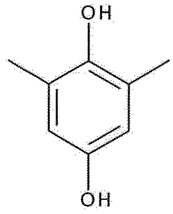 ,

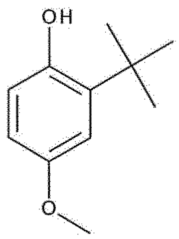 und 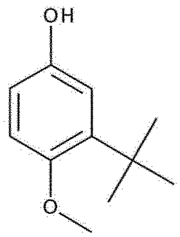

Die in den erfindungsgemäßen Nitrilkautschuken enthaltenen substituierten Phenole sind beispielsweise aus DE-OS 2150639 und DE 3337567 A1 bekannt und entweder kommerziell erhältlich oder nach den dem Fachmann geläufigen Methoden herstellbar.

Den Verbindungen der allgemeinen Formel (I) ist gemeinsam, dass sie im Rahmen einer geeignet durchgeführten Trocknung, bevorzugt über eine Fließbett-Trocknung, flüchtig sind und ihr Gehalt daher auf den wesentlichen Wert im Bereich von 0,25 bis < 0,9 Gew.%, bevorzugt von 0,3 bis 0,85 Gew.%, besonders bevorzugt 0,4 bis 0,85 Gew.%bezogen auf den Nitrilkautschuk eingestellt werden kann. Diese Einstellung ist dem Fachmann durch bekannte Maßnahmen möglich.

Zusätzlich zu den Phenolen der allgemeinen Formel (I), die wasserdampfflüchtig sind, können auch ein oder mehrere weitere Alterungsschutzmittel eingesetzt werden, insbesondere auch solche, die nicht wasserdampfflüchtig sind.

**Wiederholungseinheiten des Nitrilkautschuks:**

Die erfindungsgemäßen Nitrilkautschuke weisen Wiederholungseinheiten mindestens eines $\alpha,\beta$-ungesättigten Nitril-Monomeren und mindestens eines konjugierten Dien-Monomeren auf. Sie können darüber hinaus noch Wiederholungseinheiten von einem oder mehreren weiteren copolymerisierbaren Monomeren aufweisen.

Die Wiederholungseinheiten des mindestens einen **konjugierten Diens** gehen bevorzugt auf ($C_4$-$C_6$) konjugierte Diene oder Mischungen davon zurück. Besonders bevorzugt sind 1,2-Butadien, 1,3-Butadien, Isopren, 2,3-Dimethylbutadien, Piperylen und Gemische daraus. Insbesondere bevorzugt sind 1,3-Butadien, Isopren und Gemische daraus. Ganz besonders bevorzugt ist 1,3-Butadien.

Als **$\alpha,\beta$-ungesättigtes Nitril** kann jedes bekannte $\alpha,\beta$-ungesättigte Nitril zur Herstellung der erfindungsgemäßen Nitrilkautschuke eingesetzt werden, bevorzugt sind ($C_3$-$C_5$)-$\alpha,\beta$-ungesättigte Nitrile wie Acrylnitril, Methacrylnitril,

Ethacrylnitril oder Mischungen davon. Besonders bevorzugt ist Acrylnitril.

Soweit ein oder mehrere weitere copolymerisierbare Monomere eingesetzt werden, können dies z.B. **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin sein sowie **nicht-konjugierte Diene,** wie 4-Cyanocyclohexen und 4-Vinylcyclohexen, oder auch **Alkine,** wie 1- oder 2-Butin. Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamine eingesetzt werden.

Beispiele geeigneter Hydroxyalkylacrylatmonomere sind 2-Hydroxyethyl(meth)acrylat, 2-Hydroxy-propyl(meth)acrylat, 3-Hydroxypropyl(meth)acrylat, 3-Chlor-2-hydroxypropyl(meth)acrylat, 3-Phenoxy-2-hydroxypropyl(meth)acrylat, Glycerinmono(meth)acrylat, Hydroxybutyl(meth)acrylat, 3-Chlor-2-hydroxypropyl(meth)acrylat, Hydroxyhexyl(meth)acrylat, Hydroxyoctyl(meth)acrylat, Hydroxymethyl(meth)acrylamid, 2-Hydroxypropyl(meth)acrylat, 3-Hydroxypropyl(meth)acrylamid, Di-(Ethylenglykol)itaconat, Di-(Propylenglykol)itaconat, Bis(2-Hydroxypropyl)itaconat, Bis(2-Hydroxyethyl)itaconat, Bis(2-Hydroxyethyl)fumarat, Bis(2-Hydroxyethyl)maleat und Hydroxymethylvinylketon.

Weiterhin können als copolymerisierbare Termonomere Epoxygruppen-haltige Monomere eingesetzt werden, vorzugsweise Glycidyl(meth)acrylate.

Beispiele Epoxygruppen-haltiger Monomere sind Diglycidylitaconat, Glycidyl-p-styrencaboxylat, 2-Ethylglycidylacrylat, 2-Ethylglycidylmethacrylat, 2-(n-Propyl)glycidylacrylat, 2-(n-Propyl) glycidylinethacrylat, 2-(n-Butyl)glycidylacrylat, 2-(n-Butyl)glycidylmethacrylat, Glycidylmethyl-acrylat, Glycidylmethylmethacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzyl glycidylether, m-Vinylbenzylglycidylether, p-Vinylbenzylglycidylether und 3-Vinylcyclohexenoxid.

Alternativ können als weitere copolymerisierbare Monomere carboxygruppenhaltige, copolyme-risierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyalkylester. Bevorzugt sind die Alkylester, insbesondere $C_1$-$C_{18}$ Alkylester der α,β-ungesättigten Monocarbonsäuren, Besonders bevorzugt sind Alkylester, insbesondere $C_1$-$C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere $C_2$-$C_{12}$-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugtsweise Fluorobenzylacrylat, und Fluorobenzylmethacrylat. Einsetzbar sind auch Fluoroalkylgruppen haltige Acrylate und Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethyl-acrylat und Diethylaminoethylacrylat.

Als weitere Monomere können **α,β-ungesättigte Dicarbonsäuren**, bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich z.B. handeln um **Alkyl**-, bevorzugt $C_1$-$C_{10}$-Alkyl, insbesondere Ethyl-, n-Propyl-, iso-Propyl, n-Butyl-, tert.-Butyl, n-Pentyl-oder n-Hexyl-, **Alkoxyalkyl**-, bevorzugt $C_2$-$C_{12}$ Alkoxyalkyl-, besonders bevorzugt $C_3$-$C_8$- Alkoxyalkyl, **Hydroxyalkyl**, bevorzugt $C_1$-$C_{12}$ Hydroxyalkyl-, besonders bevorzugt $C_2$-$C_8$- Hydroxyalkyl, **Cycloalkyl-,** bevorzugt $C_5$-$C_{12}$-Cycloalkyl-, besonders bevorzugt $C_6$-$C_{12}$-Cycloalkyl, **Alkylcycloalkyl**-, bevorzugt $C_6$-$C_{12}$-Alkylcycloalkyl-, besonders bevorzugt $C_7$-$C_{10}$-Alkylcycloalkyl, **Aryl**-, bevorzugt $C_6$-$C_{14}$-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylestel-, bevorzugt Monobenzylitaconat.
- Mesaconsäuremonoalkylester, bevorzugt Mesaconsäuremonoethylester;

Als α,β-**ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglylcoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder -methacrylat, Dipentaerythrittetra, -penta- und hexaacrylat oder -methacrylat oder -itaconat, Sorbittetraacrylat, Sorbithexamethacrylat, Diacrylate oder Dimethacrylat von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide

verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und $\alpha,\beta$-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.-%, besonders bevorzugt im Bereich von 50 bis 85 Gew. %, bezogen auf das Gesamtpolymer. Der Anteil des oder der Summe der $\alpha,\beta$-ungesättigten Nitrile liegt üblicherweise bei 5 bis 80 Gew.%, bevorzugt bei 10 bis 55 Gew.-%, besonders bevorzugt bei 15 bis 50 Gew.-%, bezogen auf das Gesamtpolymer. Die Anteile der Wiederholungseinheiten an konjugiertem Dien und $\alpha,\beta$-ungesättigtem Nitril in den erfindungsgemäßen Nitrilkautschuken summieren sich jeweils zu 100 Gew.-% auf.

Die zusätzlichen Monomere können in Mengen von 0 bis 40 Gew.%, bevorzugt 0 bis 30 Gew.-%, besonders bevorzugt 0 bis 26 Gew.-%, bezogen auf das Gesamtpolymer, vorliegen. In diesem Fall werden entsprechende Anteile der Wiederholungseinheiten des oder der konjugierten Diene und/oder der Wiederholungseinheiten des oder der $\alpha,\beta$-ungesättigten Nitrile durch die Anteile dieser zusätzlichen Monomere ersetzt, wobei sich die Anteile aller Wiederholungseinheiten der Monomere weiterhin jeweils zu 100 Gew.% aufsummieren müssen.

Werden als zusätzliche Monomere Ester der (Meth)acrylsäure eingesetzt, so erfolgt dies üblicherweise in Mengen von 1 bis 25 Gew. %. Werden als zusätzliche Monomere $\alpha,\beta$-ungesättigte Mono- oder Dicarbonsäuren eingesetzt, so erfolgt dies üblicherweise in Mengen von weniger als 10 Gew. %.

Bevorzugt sind erfindungsgemäße Nitrilkautschuke, die Wiederholungseinheiten von Acrylnitril, und 1,3-Butadien aufweisen. Bevorzugt sind ferner Nitrilkautschuke, die Wiederholungseinheiten von Acrylnitril, 1,3-Butadien und einem oder mehreren weiteren copolymerisierbaren Monomere aufweisen. Ebenso bevorzugt sind Nitrilkautschuke, die Wiederholungseinheiten von Acrylnitril, 1,3-Butadien und einer oder mehreren $\alpha,\beta$-ungesättigten Mono- oder Dicarbonsäure, deren Estern oder Amiden aufweisen, und insbesondere Wiederholungseinheiten eines Alkylesters einer $\alpha,\beta$-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C $\geq$ 85 Gew. % löslich.

Die Glastemperaturen der erfindungsgemäßen Nitrilkautschuke liegen im Bereich -70°C bis +10°C, vorzugsweise im Bereich -60°C bis 0°C.

Die Nitrilkautschuke weisen Mooney-Viskositäten ML 1+4 bei 100°C von 10 bis 150 MooneyEinheiten (MU), vorzugsweise von 20 bis 100 MU auf.

Die **Mooneyviskositäten** der Nitrilkautschuke werden in einem Scherscheibenviskosimeter nach **DIN 53523/3 bzw. ASTM D 1646 bei 100°C** bestimmt. Hierbei werden jeweils die unvulkanisierten Kautschuke nach Trocknung und vor Alterung untersucht. Die Mooneyviskositäten der Nitrilkautschuke bzw. der hydrierten Nitrilkautschuke nach Trocknung und vor der Alterung werden nachfolgend als **MV 0** bezeichnet.

Zur Bestimmung der **Lagerstabilität** der unvulkanisierten Nitrilkautschuke bzw. der unvulkanisierten hydrierten Nitrilkautschuke werden die Mooney-Viskositäten bestimmt.

Die nach 48stündiger Lagerung des des Nitrilkautschuks bei 100°C bestimmten Werte für die Mooneyviskosität werden als **MV 1** bezeichnet. Die Lagerstabilität (LS) wird als Differenz der Mooneywerte nach und vor Heißluftlagerung bestimmt:

$$\text{LS 1 (48h/100°C)} = \text{MV 1} - \text{MV 0}$$

Die Lagerstabilität von Nitrilkautschuk ist gut, wenn sich die Mooneyviskosität nach 48stündiger Lagerung bei 100°C (LS = MV 1 - MV 0) um nicht mehr als 5 Mooneyeinheiten ändert.

Zur Bestimmung der Mooney-Viskositäten zwecks Berechnung der **Lagerstabilität** gemäß der o.g. Formeln hat es sich bewährt, Walzfelle der Nitrilkautschuke herzustellen, Typischerweise werden diese Walzfelle erhalten, indem 100 g des entsprechenden Kautschuks bei Raumtemperatur auf einem herkömmlichen Walzenstuhl (z.B. Schwabenthan Polymix 110) bei einer Spaltbreite von 0,8-1,0 mm ausgewalzt werden. Die Umdrehungsgeschwindigkeiten liegen bei 25 $min^{-1}$/30 $min^{-1}$ Von den Fellen werden rechteckige Ausschnitte (40-50 g) hergestellt und auf Aluminiumschalen (10cm /15 cm), deren Boden mit Teflonfolie belegt ist, im Umlufttrockenschrank gelagert. Der Sauerstoffgehalt in diesem Umlufttrockenschrank ist gegenüber normaler Luft unverändert.

**Verfahren zur Herstellung der erfindungsgemäßen Nitrilkautschuke:**

Die Herstellung dieser erfindungsgemäßen Nitrilkautschuke enthaltend mindestens ein substituiertes Phenol der allgemeinen Formel (I)

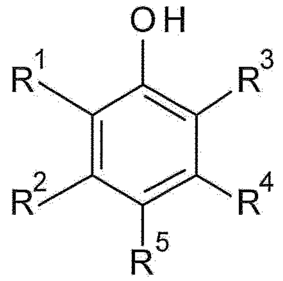

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff-Rest mit 1 bis 8 C-Atomen und zusätzlich mit einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist,

in einer Menge im Bereich von 0,25 bis < 0,9 Gew.%, bevorzugt von 0,3 bis 0,85 Gew.%, besonders bevorzugt von 0,4 Gew.% bis 0,85 Gew. %, bezogen auf den Nitrilkautschuk erfolgt, indem man

(1) den Nitrilkautschuk durch Emulsionspolymerisation mindestens eines konjugierten Diens, mindestens eines $\alpha,\beta$ ungesättigten Nitrils und keinem, einem oder mehreren weiteren copolymerisierbaren Monomeren herstellt,
(2) die resultierende Suspension des Nitrilkautschuks im wässrigen Medium mit mindestens einem substituierten Phenol der allgemeinen Formel (I) versetzt, bevorzugt in einer Menge im Bereich von 0,9 bis 1,6 Gew.%, bezogen auf den Nitrilkautschuk
und
(3) den Nitrilkautschuk koaguliert, isoliert und trocknet,
**dadurch gekennzeichnet, dass** die Trocknung bei einer Temperatur im Bereich von 100 bis 180°C, vorzugsweise bei 110 bis 150°C durchgeführt wird und der Gehalt an substituiertem Phenol der allgemeinen Formel (I) auf die Menge im Bereich von 0,25 bis < 0,9 Gew.%, bevorzugt von 0,3 bis 0,85 Gew.%, besonders bevorzugt 0,4 Gew.% bis 0,85 Gew.% bezogen auf den Nitrilkautschuk eingestellt wird.

**Schritt 1:**

Die Herstellung des Nitrilkautschuks erfolgt typischerweise über eine Emulsionspolymerisation unter Bildung einer Suspension des Nitrilkautschuks im wässrigen Medium. Üblicherweise spricht man von der Bildung eines Nitrilkautschuk-Latex. Die Emulsionspolymerisation ist dem Fachmann hinlänglich bekannt und in der Literatur umfangreich beschrieben.

Emulsionspolymerisationen werden unter Einsatz von **Emulgatoren** durchgeführt. Hierfür sind dem Fachmann eine große Bandbreite von Emulgatoren bekannt und zugänglich. Als Emulgatoren können beispielsweise anionische Emulgatoren oder auch neutrale Emulgatoren eingesetzt werden. Bevorzugt werden anionische Emulgatoren eingesetzt, besonders bevorzugt in Form wasserlöslicher Salze.

Als **anionische Emulgatoren** können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als **anionische Emulgatoren** können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert. Derartige Carbonsäuren auf

Basis modifizierter Harzsäuren bzw. Fettsäuren werden als wasserlösliche Lithium-Natrium, Kalium und Ammoniumsalze verwendet. Natrium- und Kaliumsalze sind bevorzugt.

Geeignete **anionische Emulgatoren** sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsuflonatgemische mit 12 bis 18 C-Atomen, Na-Alkylarylsulfonate, Na-Diisobutylennaphthalinsulfonat, methlyenverbückte Polynaphthalin-sulfonatgemische sowie methylenverbrückte Arylsulfonatgemische.

**Neutrale Emulgatoren** leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung notwendig werden.

Zur **Molekulargewichtsregelung** des entstehenden Nitrilkautschuks wird mindestens ein Molekulargewichtsregler eingesetzt. Der Regler wird üblicherweise in einer Menge von 0,01 bis 3,5 Gew.-Teilen, bevorzugt von 0,05 bis 3 Gew.Teilen, besonders bevorzugt 0,1 bis 2,5 Gew.Teilen, insbesondere 0,1 bis 1,5 Gew.Teilen, bezogen auf 100 Gew.-Teile der Monomermischung eingesetzt.

Zur Einstellung des IVlolekulargewichts können mercaptanhaltige Carbonsäuren, mercaptanhaltige Alkohole, Xanthogendisulfide, Thiuramdisulfide, halogenierte Kohlenwasser-stoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf (siehe Rubber Chemistry and Technology (1976), 49(3), 610-49 (Uraneck, C. A.): "Molecular weight control of elastomers prepared by emulsion polymerization" und D. C. Blackley, Emulsion Polymerization, Theory and Practice, Applied Science Publishers Ltd London, 1975, S. 329-381).

Beispiele für mercaptanhaltige Alkohole und mercaptanhaltige Carbonsäuren sind Monothioethylenglycol und Mercaptopropionsäure.

Beispiele für Xanthogendisulfide sind Dimethylxanthogendisulfid, Diethylxanthogendisulfid, und Di isopropylxanthogendisulfid.

Beispiele für Thiuramdisulfide sind Tetramethylthiuramdisulfid, Tetraethylthiuramdisulfid und Tetrabutylthiuramdisulfid.

Beispiele für halogenierte Kohlenwasserstoffe sind Tetrachlorkohlenstoff, Chloroform, Methyljodid, Dijodmethan, Difluorodijodomethan, 1,4-Dijodobutan, 1,6-Dijodohexan, Ethylbromid, Ethyljodid, 1,2-Dibromotetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl,4-Methyl-1-Penten, Dipenten sowie Terpene wie z.B. Limonen, $\alpha$-Pinen, $\beta$-Pinen, $\alpha$-Carotin und $\beta$-Carotin.

Beispiele für lineare oder verzweigte Mercaptane sind n-Hexylmercaptan oder auch Mercaptane, die 12-16 Kohlenstoffatome und mindestens drei tertiäre Kohlenstoffatomen enthalten, wobei der Schwefel an eines dieser tertiären Kohlenstoffatome gebunden ist. Diese Mercaptane sind bevorzugt und können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimere Isobuten, die in der Literatur häufig als tertiäre Dodecylmercaptan ("t-DDM") bezeichnet werden.

Solche Alkylthiolen bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z.B. z.B. JP 07-316126, JP 07-316127 und JP 07-316128 sowie GB 823,823 und GB 823,824.). Ein weiteres Beispiel für ein Alkylthiol ist 2,2,4,6,6,8,8-Pentamethylheptan-4-thiol.

Einsetzbar ist ferner ein Gemisch von $C_{12}$-Mercaptanen enthaltend

- 2,2,4,6,6-Pentamethylheptanthiol-4,
- 2,4,4,6,6-Pentamethylheptanthiol-2,
- 2,3,4,6,6-Pentamethylheptanthiol-2 und
- 2,3,4,6,6-Pentamethylheptanthiol-3,

welches zusammen mit einem Verfahren zu seiner Herstellung in der deutschen Patentanmeldung DE 102007024009 beschrieben wird.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Der Molekulargewichtsregler findet sich aufgrund seiner Funktion in einem gewissen Maß in Form von Endgruppen im Nitrilkautschuk wieder. Wird somit beispielsweise ein Alkylthiol oder ein Gemisch von Alkylthiolen eingesetzt, weist der Nitrilkautschuk in einem gewissen Maß Alkylthio-Endgruppen auf. In dem Fall, dass das oben beschriebene spezielle Gemisch von $C_{12}$-Mercaptanen eingesetzt wird, handelt es sich somit um die entsprechenden Thio-Endgruppen der im Reglergemisch enthaltenen Thiole, d.h. 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentatnethylheptan-3-thio-Endgruppen. Bevorzugt enthält ein solcher Nitrilkautschuk 2,2,4,6,6-Pentamethylheptan-4-thio-, 2,4,4,6,6-Pentamethylheptan-2-thio-, 2,3,4,6,6-Pentatnethylheptan-2-thio und 2,3,4,6,6-Pentamethylheptan-3-thio-Endgruppen.

Zur Initiierung der Emulsionspolymerisation werden typischerweise **Polymerisationsinitiatoren** eingesetzt, die in Radikale zerfallen (radikalische Polymerisationsinitiatoren). Hierzu gehören Verbindungen, die eine -O-O- Einheit (Peroxo-Verbindungen) oder eine -N≡N- Einheit (Azoverbindung) enthalten.

Als Peroxoverbindungen sind Wasserstoffperoxid, Peroxodisulfate, Peroxodiphosphate, Hydroperoxide, Persäuren, Persäureester, Persäureanhydride und Peroxide mit zwei organischen Resten geeignet. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotniacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4$ x 7 $H_2O$), Natrium-Ethylendiaminoacetat und Trinatriumphosphat; 4) Cumol-hydroperoxid / Natriumformaldehydsulfoxylat in Kombination mit Fe-II-Sulfat ($FeSO_4$ x 7 $H_2O$), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner- bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu

Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als ph-puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührlcesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startes man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, so werden Acrylnitril bzw. Butadien nachdosiert, wenn die Zusammensetzung außerhalb des azeotropen Butadien/ Acrylnitril-Verhältnisses liegt. Vorzugsweise erfolgt eine Nachdosierung bei NBR-Typen mit Acrylnitrilgehalten von 10 bis 34 Gew.% sowie bei den Typen mit 40 bis 50 Gew.% Acrylnitril (W. Hofmann, Rubber Chem. Technol. 36 (1963). Die Nachdosierung erfolgt - wie z.B. in der DD 154 702 angegeben - vorzugsweise computergesteuer-t auf der Basis eines Rechnerprogramms.

Die **Polymerisationszeit** liegt im Bereich von 5 h bis 15 h und hängt im Wesentlichen vom Acrylnitrilgehalt der Monomermischung und von der Polymerisationstemperatur ab. Die **Polymerisationstemperatur** liegt im Bereich von 0 bis 30°C, bevorzugt im Bereich von 5 bis 25°C.

Bei Erreichung von Umsätzen im Bereich von 50 bis 90%, vorzugsweise im Bereich von 60 bis 85% wird die Polymerisation abgestoppt. Hierfür wird dem Reaktionsgemisch ein **Abstoppmittel** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Ilydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Im Anschluss an die Polymerisation wird die resultierende Suspension des Nitrilkautschuks im wässrigen Medium mit mindestens einem substituierten Phenol der allgemeinen Formel (I) versetzt, bevorzugt in einer Menge im Bereich von 0,9 bis 1,6 Gew. % bezogen auf den Nitrilkautschuk..

Der Zusatz des substituierten Phenols kann beispielsweise in Kombination mit einem der vorgenannten Abstoppmittel und/oder in Kombination mit einem weiteren nicht wasserdampfflüchtigen Alterungsschutzmittel erfolgen. Die Zugabe ist aber auch getrennt vom Abstoppmittel möglich und kann vor oder nach der Zugabe des Abstoppmittel erfolgen.

Es hat sich bewährt, das substituierte Phenol der allgemeinen Formel (I) als wässrige Dispersion zuzugeben. Die Konzentration dieser wässrigen Dispersion liegt typischerweise in einem Bereich von 2,50-70 Gew.%, bevorzugt 5-60 Gew.%. Es ist auch möglich, das substituierte Phenol dem monomerhaltigen Latex am Ende der Polymerisation entweder in einem Lösungsmittel oder in Monomer (Butadien, Acrylnitril oder in einer Butadien/Acrylnitril-Mischung) gelöst vor der Monomerentfernung (Monomerentgasung) zuzusetzen. Die Zugabe in Butadien, Acrylnitril oder einem Butadien/Acrylnitri(gemisch hat sich bewährt, wobei die Konzentration des substituierten Phenols im Monomeren 0,5-30 Gew. %, bevorzugt 1-20 Gew.%. beträgt.

Optional erfolgt im Anschluss eine Monomerentgasung.

**Schritt 2:**

Im Anschluss an Schritt 1 erfolgt eine Koagulation des erfindungsgemäßen Nitrilkautschuks. Diese ist dem Fachmann hinreichend bekannt. Bevorzugt erfolgt die Latexlcoagulation des Nitrilkautschuk nach dem in EP-A-1 369 436 allgemein beschriebenen Verfahren. Die bei der Koagulation erhaltenen Nitrilkautschukkrümel werden gewaschen, durch Siebe abgetrennt und mechanisch vorentwässert. Anschließend wird eine Trocknung bei Temperaturen von 100 bis 180°C, vorzugsweise bei 110 bis 150°C durchgeführt.

Bevorzugt erfolgt die Trocknung mittels einer Fliessbetttrocknung erfolgt bei Temperaturen von 100 bis 180°C, vorzugsweise bei 110 bis 150°C.

Ein geeigneter Fliessbett-Trockner umfasst ein Trockenaggregat, in dem der zu trocknende Nitrilkautschuk auf

einen mit Durchlässen versehenen Boden, bevorzugt in Form eines Lochblechs oder eines Spaltblechs, aufgegeben wird, und anschließend mit Luft einer Temperatur im Bereich von 100 bis 180°C, vorzugsweise bei 110 bis 150°C durchströmt wird. Die feuchtere Abluft wird aus dem Trockenaggregat ausgeschleust. In einer weitere Ausführungsform kann der mit Durchlässen versehene Boden auch in Vibration versetzt werden, so dass der Nitrilkautschuk unter Vibration getrocknet werden kann.

Bei der Trocknung wird die an den Krümeln anhaftende Restfeuchte entfernt. Die Aufarbeitung wird dabei jeweils so durchgeführt, dass das im Nitrilkautschuk enthaltene substituierte Phenol der allgemeinen Formel (I) zu 20-90 Gew.%, insbesondere zu 30-80 Gew.%, bezogen auf die Menge des substituierten Phenols der allgemeinen Formel (I) im Nitrilkautschuk entfernt wird.

Der abschließend erhaltene erfindungsgemäße Nitrilkautschuk weist weinen Gehalt an substituiertem Phenol der allgemeinen Formel (I) im getrockneten Zustand flüchtige Anteile < 1,0 Gew. %, einen Gelanteil < 1 Gew. % und einen Gehalt an Phenol der allgemeinen Formel (I) im Bereich von 0,25 bis < 0,9 Gew. % aufweist.

**<u>Vulkanisierbare Mischungen, Verfahren zu deren Herstellung, Vulkanisate sowie deren Herstellung:</u>**

**Gegenstand der Erfindung sind** ferner vulkanisierbare Mischungen enthaltend mindestens einen erfindungsgemäßen Nitrilkautschuk und mindestens ein Vernetzungssystem. Bevorzugt enthalten können diese vulkanisierbaren Mischungen noch ein oder mehrere weitere typische Kautschukadditive enthalten.

Die Herstellung dieser vulkanisierbaren Mischungen erfolgt durch Mischen mindestens eines erfindungsgemäßen Nitrilkautschuks (i) und mindestens eines Vernetzerungssystems (ii) und gegebenenfalls einem oder mehreren weiteren Additiven.

Das Vernetzungssystem enthält mindestens einen Vernetzer und optional ein oder mehrere Vernetzungsbeschleuniger.

Üblicherweise wird der erfindungsgemäße hydrierte Nitrilkautschuk zunächst mit allen gewählten Additiven gemischt und erst als letztes das Vernetzungssystem aus mindestens einem Vernetzer sowie optional einem Vernetzungsbeschleuniger zugemischt.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylctunylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyl-trimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den unhydrierten, ganz oder teilweise hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen. Umgekehrt kann die Vernetzung der erfindungsgemäßen Nitrilkautschuks aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyl-dithiocarbamat (ZDMC), Zinkdiethyldithiocarbamat (ZDEC), Zinkdibutyl-dithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat.

Als Thiurame können z.B. Tetramethylthiuramdisulfid (TMTD), Tetramethylthiurammonosutfid (TMTM), Dimethyldiphenylthiuramdisulfid, Tetrabenzylthiuramdisulfid, Dipentamethylenthiuramtetrasulfid oder Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) oder Kupfer-2-mercaptobenzothiazol eingesetzt werden.

Als Sulfenamidderivate können z.B. N-Cyclohexyl-2-benzothiazytsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können z.B. Zinkdi($C_2$-$C_{16}$)alkyldithiophosphate Kupferdi($C_2$-$C_{16}$)alkyldithiophosphate und Dithiophoshorylpolysulfid eingesetzt werden.

Als Caprolactam kann beispielsweise Dithio-bis-caprolactam eingesetzt werden.

Als Thioltarnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze und Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkyldithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei einer Schwefelvernetzung ist es möglich, zusätzlich zu den Vernetzungsmitteln und oben genannten Zusätzen auch weitere anorganische bzw. organische Substanzen mit zu verwenden, wie Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "$-C(=O)NHNH_2$")

Beispiele für derartige Polyamin-Vernetzer (ii) sind:

- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin;
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzers in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des hydrieren Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-T'olylbiguanidin und Di-o-tolylguanidin-Salz der

Dicathecolborsäure. Einsetzbar sind ferner Aldehydamin-Vernetzungsbeschleuniger wie z.B. n-Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabieyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des hydrierten Nitrilkautschuks.

Die vulkanisierbare Mischung basierend auf dem erfindungsgemäßen hydrierten Nitrilkautschuk kann prinzipiell auch Anvulkanisationsverzögerer enthalten, die sich bei einer Vulkanisation mit Schwefel oder mit Peroxiden unterscheiden:

Bei einer Vulkanisation mit Schwefel werden eingesetzt: Cyclohexylthiophthalimid (CTP), N,N' Dinitrosopentamethlyentetramin (DNPT), Phthal-säureanhydrid (PTA) und Diphenylnitrosamin. Bevorzugt ist Cyclohexylthiophthalimid (CTP).

Bei einer Vulkanisation mit Peroxiden werden zur Verzögerung der Anvulkanisation Verbindungen wie sie in WO-A-97/01597 und US-A-4,857,571 genannt sind, eingesetzt. Bevorzugt sind sterisch gehinderte p-Dialkylaminophenole, insbesondere Ethanox 703 (Sartomer).

Diese weiteren üblichen kautschukadditive umfassen z.B. die typischen und dem Fachmann bekannten Substanzen wie Füllstoffe, Füll-stoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden. Die Füllstoffe werden üblicherweise in Mengen im Bereich von 5 bis 350 Gew.Teilen, bevorzugt bis 5 bis 300 Gew.Teilen, bezogen auf 100 Gew.Teile des hydrierten Nitrilkautschuks eingesetzt.

Als **Füllstoffaktivatoren** kommen insbesondere organische Silane, wie beispielsweise Bis(tri-ethoxy-silyl-propyl-tetrasulfid), Bis(tri-ethoxy-silyl-propyl-disulfid), Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen in Betracht.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem erfindungsgemäßen Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe der Additive und typischerweise am Schluss des Vernetzungssystems. Das Mischen erfolgt unter Kontrolle der Temperatur mit der Maßgabe, dass das Mischgut für eine geeignete Zeit bei einer Temperatur im Bereich von 100 bis 150°C verbleibt. Nach einem geeigneten Mischzeitraum wird der Innenmischer gelüftet und der Schacht gereinigt. Nach einem weiteren Zeitraum wird der Innenmischer unter Erhalt der vulkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden.

**Gegenstand der Erfindung** ist ferner ein **Verfahren zur Herstellung von Vulkanisaten** auf Basis der erfindungsgemäßen Nitrilkautschuke, dadurch gekennzeichnet, dass die vulkanisierbaren Mischungen enthaltend den erfindungsgemäßen Nitrilkautschuk der Vulkanisation unterworfen werden. Üblicherweise erfolgt die Vulkanisation bei Temperaturen im Bereich von 100°C bis 200°C, bevorzugt bei Temperaturen von 120°C bis 190°C und insbesonders bevorzugt von 130°C bis 180°C.

Bevorzugt erfolgt die Vulkanisation in einem Formgebungsverfahren.

Die vulkanisierbare Mischung wird dafür mittels Extrudern, Spritzgussanlagen, Walzen oder Kalandern weiterverarbeitet. Die so erhältliche vorgeformte Masse wird anschließend typischerweise in Pressen, Autoklaven, Heißluftanlagen oder in sogenannten automatischen Mattenvulkanisationsanlagen ausvulkanisiert, wobei sich Temperaturen im Bereich von 120°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

**Gegenstand der Erfindung** sind entsprechend die so erhältlichen **Vulkanisate auf Basis der erfindungsgemäßen Nitrilkautschuke,** bevorzugt in Form von Formteilen. Diese Vulkanisate können die Form eines Riemen, von Walzenbelägen, einer Dichtung, einer Kappe, eines Stopfen, eines Schlauchs, von Bodenbelag, von Dichtungsmatten oder -platten, Profilen oder Membranen aufweisen. Speziell kann es sich um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch, eine Schuhsohle oder - teile davon oder eine Pumpenmembran handeln.

## Beispiele:

### I Charaktei-isiet-ungsmethoden

Die quantitative **Bestimmung von 2,6-Di-tert.butyl-p-kresol** (Vulkanox® KB) in Nitrilkautschuk bzw. in hydriertem Nitrilkautschuk erfolgt gaschromatographisch unter Verwendung eines internen Standards (Naphthalin). Für die Bestimmung werden 3 bis 5 g Polymer mit einer Genauigkeit von 0,01 g in 40 mL eines Toluol/THF-Gemisches (Volumetrverhältnis 1:1) unter Rühren in einem verschließbaren Erlenmeyerkolben gelöst. Der Lösung werden als interner Standard 20,0 mg Naphthalin (gelöst in 5 mL Toluol) zugesetzt und durch Rühren gleichtnäßig verteilt. Durch Zugabe von 80 mL Methanol wird das Polymeren ausgefällt. Das Serum wird gaschromatographisch (Agilent Technologies Gerät 6890, Waldbronn, Germany) mit folgenden Geräteeinstellungen untersucht:

| | |
|---|---|
| Kapillarsäule: | HP-5, Länge: 30 m; Innendurchmesser 0,32 mm; Filmdicke: 0,25 μm |
| Injektionsmenge: | 1 μl |
| Injektionstemperatur: | 320 °C |
| Ofen-Temperaturprogramm: | 100°C, Aufheizgeschwindigkeit: 10°C/min > 300°C |
| Detektortemperatur: | 300°C |

Unter diesen Bedingungen wird für **2,6-Di-tert.butyl-p-kresol** eine Retentionszeit von 3,4 min und für Naphthalin eine Retentionszeit von 6,44 min gefunden.

In unabhängigen Messungen wird mit denselben Geräteeinstellungen das Responseverhältnis von 2,6-**Di-tert.butyl-p-kresol** zu Naphthalin als Basis für die Berechnung des Gehalts an **2,6-Di-tert.butyl-p-kresol** bestimmt.

Die Wiederauffindungsrate ("WAR") von 2,6-Di-tert.butyl-p-kresol im getrockneten Nitrilkautschuk ($KB_{BR}$) wird auf der Basis der in den Latex gegebenen Menge an 2,6-Di-tert.butyl-p-kresol ($KB_{Latex}$) nach folgender Formel berechnet:

$$WAR = \frac{100 \times KB_{NBR}}{KB_{Latex}}$$

worin

| | |
|---|---|
| "WAR" | Wiederauffindungsrate in % |
| $KB_{NBR}$ | im trockenen Nitrilkautschuk bestimmter Vulkanox KB Gehalt in Gew.% |
| $KB_{Latex}$ | zum NBR Latex hinzugefügte Vulkanox KB Menge in Gew.% bezogen auf trocknen Nitrilkautschuk |

Die **flüchtigen Anteile** wurden entsprechend ISO 248:2005 (E) (fourth edition vom 15.06.2005) "Rubber, raw - Determination of volatile matter content" nach der unter dem Punkt 3.2 beschriebenen Methode "Oven Method" bestimmt.

Zur **Bestimmung des Gelgehalts** wurden 250 mg des Nitrilkautschuks in 25 ml Methylethylketon 24 h bei 25°C unter Rühren gelöst. Der unlösliche Anteil wurde durch Ultrazentrifugation bei 20000U/rnin bei 25°C abgetrennt, getrocknet und gravimetrisch bestimmt. Der Gelgehalt wird in Gew. % bezogen auf die Einwaage angegeben und liegt bei Werten < 1,0 Gew. %.

Für die Bestimmung des **Calcium-Gehalts** wurden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser wurde der Calcium-Gehalt durch ICP-OES (inductively coupled plasma - optical emission spectrometry) bei einer Wellenlänge von 317,933 nm gegen mit Säurematrix angepasste Kalibrierlösungen bestimmt. Je nach Konzentration der Elemente in der Aufschlusslösung bzw. Empfindlichkeit des verwendeten Messgeräts wurden die Konzentrationen der Probelösungen für die jeweils verwendeten Wellenlängen an den linearen Bereich der Kalibrierung angepasst **(**B. Welz "Atomic Absorption Spectrometry", 2nd Ed., Verlag Chemie, Weinheim 1985**)**

Der **Chlorgehalt** der erfindungsgemäßen Nitrilkautschuke wird wie folgt in Anlehnung an DIN EN 14582, Verfahren A bestimmt: Die Nitrilkautschuk-Probe wird in einem Druckgefäß nach Parr in einer Schmelze aus Natriumperoxid und Kaliumnitrat aufgeschlossen. Zu der entstehenden Schmelze wird Sulfitlösung zugegeben und mit Schwefelsäure angesäuert. In der dabei erhaltenen Lösung wird das entstandene Chlorid durch eine potentiometrische Titration mit Silbernitratlösung bestimmt und als Chlor berechnet.

Die **Mooneyviskositäten** der unvulkanisierten Nitrilkautschuke bzw. der unvulkanisierten hydrierten Nitrilkautschuke wurden in einem Scherscheibenviskosimeter nach **DIN 53523/3 bzw. ASTM D 1646** bei 100°C bestimmt. Die Mooneyviskositäten der getrockneten, ungealterten Nitrilkautschuke bzw. der ungealtenen hydrierten Nitrilkautschuke werden nachfolgend als MV 0 bezeichnet.

Zur Bestimmung der **Lagerstabilität** wurde der anvulkanisierte Nitrilkautschuk einer Heißluftlagerung (48 h) in einem Umlufttrockenschrank bei 100°C unterzogen. Die nach 48stündiger Lagerung bei 100°C bestimmten Mooneywerte wurden als MV 1 bezeichnet. Die Lagerstabilität (LS) wurden als Differenz der Mooneywerte nach Heißluftlagerung (MV 1) und vor der Heißluftlagerung (MV 0) bestimmt:

$$\mathbf{LS\ (48h/100°C) = MV\ 1 - MV\ 0}$$

Die Lagerstabilität von Nitrilkautschuk (LS) ist ausreichend, so lange sich die Mooneyviskosität nach 48stündiger Lagerung bei 100°C (MV 1 - MV 0) um nicht mehr als 5 Mooneyeinheiten ändert.

**II Anvulkanisationverhalten und Vulkanisationsgeschwindigkeit**

Das **Anvulkanisationsverhalten** ("Mooneyscorch") wird mit Hilfe eines Scherscheibenviskosimeters nach DIN 53 523 bei 120°C bestimmt. Für die Bestimmung wird ein kleiner Rotor (S) verwendet. "MS 5 (120°C)" bedeutet die Zeit in Minuten, in der der Mooneywert um 5 Mooneyeinheiten gegenüber dem Minimalwert ansteigt.

Die **Vulkanisationsgeschwindigkeit** wird nach DIN 53 529, Teil 3 bei 160°C mit Hilfe eines Rheometers der Firma Monsanto (MDR 2000E) als Differenz von $t_{90}$ - $t_{10}$ bestimmt, wobei $t_{10}$ und $t_{90}$ die Vulkanisationszeiten sind, bei denen 10 % bzw. 90% des Endvulkanisationsgrades erreicht sind.

Das Vulkanisationsverhalten der Mischungen wurde im Rheometer bei 160°C nach DIN 53 529 Auf diese Weise wurden die charakteristischen Vulkanisationszeiten $t_{10}$ und $t_{90}$ bestimmt.

**III Mechanische Eigenschaften**

Die **mechanischen Eigenschaften** der Kautschuke wie Spannungswert bei 300% Dehnung ($\sigma_{300}$), Reißfestigkeit ($\sigma_{max}$) und Bruchdehnung($\varepsilon_b$) werden an Vulkanisaten nach DIN 53 504 bestimmt.

**Beispiele:**

Einen tabellarischen Überblick über die durchgeführten Beispiele gibt **Tabelle 1.** Für die Herstellung der Nitrilkautschuke wurde zur Molekulargewichtsregelung tert. Dodecylmercaptan von den Herstellern Lanxess (Lastex A) und Chevron Phillips (Latex B) eingesetzt. Vor der Latexkoagulation wurden die Latices mit unterschiedlichen Mengen an 2,6-Di-tert.butyl-p-kresol (Vulkanox® KB der Lanxess Deutschland GmbH) versetzt. Für die Latexkoagulation wurde

Natrium- bzw. Magnesiumchlorid verwendet. Nach Latexkoagulation und Wäsche der erhaltenen Kautschukkrümel wurden diese durch Abtropfen auf einem Sieb und mechanisches Abpressen vorentwässert und anschließend thermisch getrocknet. Die thermische Trocknung erfolgte sowohl im Vakuumtrockenschrank (in **Tabelle 1** als "VTS" abgekürzt) als auch durch Fließbett-Trocknung (in **Tabelle 1** mit "FB" abgekürzt).

Tabelle 1: Übersicht über die durchgeführten Versuche (erfindungsgebmäße Produkte sind mit "*" gekennzeichnet)

| Latex | | | | Fällsalz | NBR-Trocknung | | Vulkanoxb@KB Zusatz zu Kautschuk-Mischung [Gew.-Teile] |
|---|---|---|---|---|---|---|---|
| Beispiel | Molekulargewichtsregler | | Vulkanox® KB Zusatz zu Latex | | VTS | FB | |
| | Lanxess-TDM | Phillips-TDM | [Gew.-Teile] | | | | |
| 1.1 | A | - | 0,9 | NaCl | - | - | - |
| 1.2 | A | - | 1,20 | NaCl | - | - | - |
| 1.3 | A | - | 1,50 | NaCl | - | - | - |
| 1.4 | - | B | 1,20 | $MgCl_2$ | - | - | - |
| 1.5 | - | B | 1,60 | $MgCl_2$ | | - | - |
| 2.1 | A | - | 0,9 | NaCl | X | - | - |
| 2.2 | A | - | 1,20 | NaCl | X | - | - |
| 2.3 | A | - | 1,50 | NaCl | X | - | - |
| 2.4 | - | B | 1,20 | $MgCl_2$ | X | - | - |
| 2.5 | - | B | 1,60 | $MgCl_2$ | X | - | - |
| 3.1* | A | - | 0,9 | NaCl | - | X | - |
| 3.2* | A | - | 1,20 | NaCl | - | X | - |
| 3.3* | A | - | 1,50 | NaCl | - | X | - |
| 3.4* | - | B | 1,20 | $MgCl_2$ | - | X | - |
| 3.5* | - | B | 1,60 | $MgCl_2$ | - | X | - |
| 4.1 | A | - | 0,9 | NaCl | - | X | 0,5 |
| 5.1 | A | - | 0,9 | NaCl | - | X | 1,0 |

A Herstellung der NBR-Latices durch Emulsionspolymerisation

Auf Basis der in der folgenden **Tabelle 2** angegebenen Rezepturen wurden zwei NBR-Latices (Latex A und Latex B) hergestellt, die sich durch die Art des zur Molekulargewichtsregelung eingesetzten tertiär Dodecylomercaptans (Lanxess und Chevron Phillips) unterscheiden. Sämtliche Einsatzstoffe sind in Gew.-Teilen bezogen auf 100 Gew.-Teile der Monomermischung angegeben.

**Tabelle 2: Einsatzstoffe für die Herstellung der NBR-Latices A und B**

| Einsatzstoffe [Gew.-Teile] | Latex A | Latex B |
|---|---|---|
| Butadien | 73 | 73 |
| Acrylnitril | 27 | 27 |
| Gesamt- Wassennenge | 174 + 16 + 30 | 174 + 16 + 30 |
| Erkantol® BXG[1)] | 3,67 | 3,67 |
| Baykanol® PQ[2)] | 1,10 | 1,10 |
| K-Salz der Kolcosfettsäure | 0,73 | 0,73 |
| KOH | 0,05 | 0,05 |
| t-DDM[3)] | 0,24 + 0,24 | - |
| t-DDM[3)] | - | 0,31 + 0,31 |
| Kaliumperoxodisulfat[5)] | 0,39 + 0,19 | 0,39 + 0,19 |
| Tris-($\alpha$-hydroxy-ethyl)-amin[6)] | 0,55 | 0,55 |
| Na-Dithionit[7)] | 1,19 | 1,19 |
| Kaliumhydroxid | 1,28 | 1,28 |

[1)] Na-Salz einer Mischung von mono- und disulfonierten Naphthalinsulfonsäuren mit Isobutylenoligomersubstituenten (Erkantol® BXG)
[2)] Na-Salz von Methylen-bis-Naphthalinsulfonat (Baykanol® PQ, Lanxess Deutschland GmbH)
[3)] t-DDM (tertiäres-Dodecylmercaptan): $C_{12}$-Mercaptangemisch der Lanxess Deutschland GmbH
[3)] t-DDM (tertiäres-Dodecylmercaptan): $C_{12}$-Mercaptangemisch von Chevron Phillips Chemical Company LP (Sulfole® 120)
[5)] Kaliumperoxodisulfat (Aldrich Bestell-Nr. : 21,622-4)
[6)] Tris-($\alpha$-hydroxy-ethyl)-amin (Aldrich Bestell-Nr. : T5,830-0)
[7)] Na-Dithionit (Aldrich Bestell-Nr. : 15,795-3)

Die Herstellung des NBR-Latex erfolgte diskontinuierlich in einem 2 $m^3$-Autoklaven mit Rührwerk.

Bei dem Ansatz wurden 350 kg der Monomermischung und eine Gesamtwassermenge von 770 kg verwendet. In 609 kg dieser Wassermenge wurden die Emulgatoren Erkantol® BXG (12,85 kg), Baykanol® PQ (3,85 kg) und das Kaliumsalz der Kokosfettsäure (2,56 kg) mit 84 g Natriumhydroxid im Autoklaven vorgelegt und mit einem Stickstoffstrom gespült. Danach wurden die entstabilisierten Monomeren (255,5 kg Butadien und 94,5 kg Acrylnitril) und eine Teilmenge des Reglers in den Reaktor gegeben. Bei Latex A 0,84 kg tert. Dodecylmercaptan von Lanxess und bei Latex B 1,09 kg tert. Dodecylmercaptan von Chevron Phillips. Die Restmenge an Wasser (161 kg) wurde für die Herstellung der wässrigen Lösungen von Tris-($\alpha$-hydroxy-ethyl)-amin, Kaliumperoxodisulfat und Natriumdithionit verwendet.

Durch Zugabe wässriger Lösungen von 1,365 kg Kaliumperoxodisulfat (entsprechend den 0,39 Gew.-Teilen gemäß Tabelle 1) und 1,925 kg Tris-($\alpha$-hydroxy-ethyl)-amin (entsprechend den 0,55 Gew.-Teilen gemäß Tabelle 1) wurde die Polymerisation bei 17°C gestartet und über die gesamte Laufzeit bei dieser Temperatur gehalten. Der Polymerisationsverlauf wurde durch gravimetrische Umsatzbestimmungen verfolgt. Bei einem Polymerisationsumsatz von 15 % wurden bei Latex A 0,84 kg tert. Dodecylmercaptan von Lanxess (entsprechend 0,24 Gew.-Teilen gemäß **Tabelle 2)** bzw. bei Latex B 1,09 kg tert. Dodecylmercaptan von Chevron Phillips (entsprechend 0,31 Gew.-Teilen gemäß **Tabelle 2)** und 0,665 kg Kaliumperoxodisulfat (entsprechend 0,19 Gew.-Teilen gemäß Tabelle 1) nachdosiert. Beim Erreichen von 70 % Umsatz wurden die Polymerisationsansätze durch Zugabe von 4,165 kg Natriumdithionit (1,19 Gew.-Teile) und 4,48 kg Kaliumhydroxid (1,28 Gew.-Teile) gelöst in 105 kg Wasser (30 Gew.-Teile) abgestoppt. Nicht umgesetzte Monomere und sonstige flüchtige Bestandteile wurden mittels Wasserdampfdestillation unter reduziertem Druck entfernt.

Die charakteristischen Daten der erhaltenen Latices A und B sind in nachfolgender **Tabelle 3** zusammengefasst.

**Tabelle 3: Charakteristische Daten der NBR-Latices A und B**

| **Latex** | **A** | **B** |
|---|---|---|
| Feststoffgehalt [Gew.%] | 21,5 | 22,1 |
| pH-Wert | 8,9 | 8,7 |
| Acrylnitrilgehalt [Gew. %] | 28,9 | 28,4 |

**B Aufarbeitung der NBR-Latices A und B**

Vor der Koagulation wurden die **NBR-Latices A und B** mit unterschiedlichen Mengen an **4-Methyl-2,6-*tert*-Butylphenol** (Vulkanox® KB der Lanxess Deutschland GmbH) versetzt **(Tabelle 4).** Hierfür wurde eine 50%ige Dispersionen von Vulkanox® KB in Wasser verwendet.

Die wässrigen **Dispersionen von Vulkanox® KB** basierte auf folgender Rezeptur, wobei die Herstellung bei 95 bis 98 °C mit Hilfe eines Ultraturrax erfolgte:

| | |
|---|---|
| 360 g | Entionisiertes Wasser (DW-Wasser) |
| 40 g | Alkylphenolpolyglykolether (Emulgator NP® 10 der Lanxess Deutschland GmbH) |
| 400 g | Vulkanox® KB bzw. Vulkanox® BKF der Lanxess Deutschland GmbH |

Die Zusätze an 4-Methyl-2,6-*tert*-Butylphenol wurden auf den im Latex enthaltenen Nitrilkautschuk-Feststoff bezogen und werden in Gew. % angegeben **(Tabelle 4).**

Für die Koagulation der **NBR-Latices** wurden wässrige Lösungen von Natrium- bzw. Magnesiumchlorid eingesetzt. Die Konzentration der Salzlösungen sowie die für die Fällung eingesetzten Salzmengen wurden jeweils ohne Kristallwasser berechnet und wurden auf den im Latex enthaltenen Feststoff bezogen.

Sowohl die **Natrimchloridlösung** als auch die **Magnesiumchloridlösung** war jeweils 26 Gew.%ig, wobei für die Herstellung der wässrigen Lösung normales Brauchwasser (nicht deionisiert und damit Calcium-Ionen enthaltend) verwendet wurde.

Die für die Stabilisierung der Nitrilkautschuks eingesetzten Alterungsschutzmittel sowie deren Mengen, die zur Latexkoagulation verwendeten Salze, die Konzentration der Salzlösungen, die bezogen auf den Nitrilkautschuk eingesetzten Salzmengen, die Koagulationstemperatur, die Temperatur bei der Wäsche sowie die Dauer der Wäsche sind in **Tabelle 4** zusammengefasst.

**Tabelle 4: Zusätze von Vulkanox® KB und Aufarbeitung der NBR-Latices A und B**

| Beispiel | Latex | Vulkanox® | | Fällsalz | Konzentration der Salzlösung | Salzmenge bez. auf NBR | Koagulationstemperatur | Waschbedingungen | | |
|---|---|---|---|---|---|---|---|---|---|---|
| | | Typ | Menge [Gew.%] | | [Gew.%] | [Gew.%] | [°C] | Wasser-art | T [°C] | Zeit [h] |
| 1.1 | A | KB | 0,9 | NaCl | 26 | 53,3 | 60 | BW | 23 | 5 |
| 1.2 | A | KB | 1,20 | NaCl | 26 | 53,3 | 60 | BW | 23 | 8 |
| 1.3 | A | KB | 1,50 | NaCl | 26 | 53,3 | 60 | BW | 23 | 8 |
| 1.4 | B | KB | 1,20 | $MgCl_2$ | 26 | 2,37 | 60 | BW | 60 | 8 |
| 1.5 | B | KB | 1,60 | $MgCl_2$ | 26 | 2,37 | 60 | BW | 60 | 5 |

**Die Aufarbeitung der NBR-Latices** erfolgte diskontinuierlich in einem rührbaren, offenen Behälter mit 200 1 Fassungsvermögen, der mit einem Zu- und Abfluss versehen war. Der Abfluss konnte durch zwei seitlich angebrachte Schienen mittels eines Siebes (Maschenweite 2 mm) so abgesperrt werden, dass die bei der Latexkoagulation erhaltenen Kautschukkrümel bei der Wäsche nicht ausgeschwemmt wurden.

Für die Koagulation wurde eine Latexmenge eingesetzt, die so berechnet war, dass bei 100%iger Ausbeute jeweils 25 kg Feststoff erhalten wurden. Der Latex wurde im Koagulationsbehälter vorgelegt, auf 60°C erwärmt und unter Rühren durch langsame Zugabe der wässrigen Salzlösung koaguliert. Nach Abschluss der Latexkoagulation wurden die Kautschukkrümel ohne vorhergehende Abtrennung des Serums durch Verdünnungswäsche gewaschen. Für die Krümelwäsche wurde normales calciumionenhaltiges Leitungswasser ("BW") verwendet, wobei der Durchsatz an Waschwasser konstant (200 1/h) gehalten wurde.

Nach Beendigung der Wäsche wurden die Kautschukkrümel mit einem Sieb entnommen, durch Abtropfen von anhaftendem Wasser befreit, und anschließend in einer Weldingschnecke auf Restfeuchten von 12 bis 25 Gew. % mechanisch durch Abquetschen entwässert.

Anschließend wurden die Produkte in einem Vakuumtrockenschrank (VTS) oder mittels Fließbett-Trocknung (FB) thermisch getrocknet.

Die Trocknung im Vakuumtrockenschrank erfolgte diskontinuierlich bei 70°C, wobei während der Trocknung ein leichter Luftstrom durchgeleitet wurde. Nach der Trocknung betrugen die Gehalte flüchtiger Anteile < 1,0 Gew. %.

Die Fließbett-Trocknung wurde diskontinuierlich in einem Labortrockner (Schnelltrockner TG 200) der Firma Kurt Retsch (Haan/Düsseldorf) durchgeführt. Für die FB-Trocknung wurden jeweils 1,2 kg des mechanisch entwässerten Kautschuks eingesetzt. Die Strömungsgeschwindigkeit der heißen Luft wurde bei allen Versuchen bei 100 $m^3/h$ konstant gehalten. Die Temperatur und die Verweilzeiten bei der Fließbetttrocknung wurden variiert **(Tabelle 6a).**

Nach der thermischen Trocknung, wurden die unvulkanisierten Nitrilkautschuke analytisch (Gehalte an 4-Metlryl-2,6-*tert*-Butylphenol, Calcium, Chlor und Gel) sowie durch ihre Lagerstabilität (LS) charakterisiert.

In den **Tabelle 5** sind die Eigenschaften der durch Trocknung im Vakuumtrockenschrank erhaltenen Nitrilkautschuke zusammengefasst.

<u>Tabelle 5:</u> **Eigenschaften der im Vakuumschrank getrockneten unvulkanisierten Nitrilkautschuke 2.1 - 2.5 (nicht erfindungsgemäß)**

| **NBR** | **Latex** | **Zusatz an Vulkanox®** | | **Fällsalz** | **Alterungsschutzmittel in NBR** | | **Gehalte** | | | **ML1+4@100°C** | | |
|---|---|---|---|---|---|---|---|---|---|---|---|---|
| | | **Art** | **Menge [Gew.%]** | | **Gehalt [Gew.%]** | **Wiederauffindungsrate [%]** | **Ca-[ppm]** | **Chlor [ppm]** | **Gel [%]** | **MVO [ME]** | **MV1 [ME]** | **LS [ME]** |
| 2.1 | A | KB | 0,9 | NaCl | 0,9 | 100 | 650 | 120 | 0,4 | 47 | 48 | 1 |
| 2.2 | A | KB | 1,20 | NaCl | 1,16 | 97 | 600 | 120 | 0,6 | 46 | 48 | 2 |
| 2.3 | A | KB | 1,50 | NaCl | 1,48 | 99 | 490 | 130 | 0,4 | 44 | 45 | 1 |
| 2.4 | B | KB | 1,20 | $MgCl_2$ | 1,20 | 100 | 330 | 87 | 0,5 | 46 | 48 | 2 |
| 2.5 | B | KB | 1,60 | $MgCl_2$ | 1,58 | 99 | 390 | 75 | 0,7 | 45 | 47 | 2 |

Nach VTS-Trocknung liegen die Gehalte an 4-Methyl-2,6-*tert*-Butylphenol im Bereich 0,9 bis 1,58 Gew. % (Tabelle 5). Hieraus berechnen sich auf der Basis der in den Latex gegebenen Vulkanox® KB-Mengen Wiederauffindungsraten für 4-Methyl-2,6-*tert*-Butylphenol von 97 bis 100 %. Die Wiederauffindungsraten sind unabhängig von der Art des bei der Latexkoagulation verwendeten Elektrolyts und den bei der Krümelwäsche angewandten Bedingungen. Des Weiteren weisen die im VTS thermisch getrockneten Nitrilkautschuk eine ausreichende Lagerstabilität LS auf. Die Ca-Gehalte liegen im Bereich 390 bis 650 ppm, die Chlorgehalte im Bereich 75 bis 130 ppm und die Gelgehalte im Bereich 0,4 bis 0,7 Gew. %.

In den Tabelle 6a sind die Bedingungen für die Fließbett-Trocknung der Nitrilkautschuke zusammengefasst.

**Tabelle 6a: Bedingungen bei der Fließbett-Trocknung der Nitrilkautschuke (erfindungsgemäße Produkte sind mit "*" gekennzeichnet)**

| NBR | Latex | Zusatz an Vulkanox® | | Bedingungen bei der Fließbett-Trocknung | | |
|---|---|---|---|---|---|---|
| | | Art | Menge [Gew.%] | Restfeuchte [Gew. %] | Temperatur [°C] | Zeit [min] |
| 3.1* | A | KB | 0,9 | 15 | 110 | 8 |
| 3.2* | A | KB | 1,20 | 17 | 120 | 6 |
| 3.3* | A | KB | 1,50 | 25 | 135 | 5 |
| 3.4* | B | KB | 1,20 | 12 | 125 | 5 |
| 3.5* | B | KB | 1,60 | 16 | 125 | 5 |

In den **Tabelle 6b** sind die Eigenschaften der nach Fließbett-Trocknung erhaltenen Nitrilkautschuke zusammengefasst.

**Tabelle 6b: Eigenschaften der im Fließbett getrockneten Nitrilkautschuke (erfindungsgemäße Produkte sind mit "*" gekennzeichnet)**

| NBR | Latex | Vulkanox® KB | | | Gelgehalt | ML1+4@100°C | | |
|---|---|---|---|---|---|---|---|---|
| | | Zusatz [Gew.%] | Menge im NBR [Gew.%] | Wiederauffindungs-rate [%] | [Gew.%] | MV 0 [ME] | MV 1 [ME] | LS [ME] |
| 3.1* | A | 0,9 | 0,49 | 54 | 0,5 | 43 | 45 | 2 |
| 3.2* | A | 1,20 | 0,59 | 49 | 0,5 | 44 | 46 | 2 |
| 3.3* | A | 1,50 | 0,81 | 54 | 0,4 | 46 | 49 | 3 |
| 3.4* | B | 1,20 | 0,61 | 51 | 0,6 | 44 | 45 | 1 |
| 3.5* | B | 1,60 | 0,79 | 49 | 0,5 | 45 | 46 | 2 |

Nach FB-Trocknung liegen die Gehalte an 4-Methyl-2,6-*tert*-Butylphenol im Bereich 0,49 bis 0,81 Gew. % **(Tabelle 6b).** Hieraus berechnen sich auf der Basis der in den Latex gegebenen Vulkanox® KB-Mengen Wiederauffindungsraten für 4-Methyl-2,6-*tert*-Butylphenol von 49 bis 54 %. Die Wiederauffindungsraten sind unabhängig von der Art des bei der Latexkoagulation verwendeten Elektrolyts und den bei der Krümelwäsche angewandten Bedingungen. Des Weiteren weisen die durch FB-Trocknung erhaltenen Nitrilkautschuk Gelgehalte im Bereich von 0,4 bis 0,6 Gew. % sowie eine ausreichende Lagerstabilität LS auf.

Für die Bestimmung des Vulkanisationsverhaltens der unvulkanisierten Kautschukmischungen und der Vulkanisateigenschaften wurden auf Basis der in den nicht erfindungsgemäßen Beispielen 2.1 bis 2.5 sowie den erfindungsgemäßen Beispielen 3.1* bis 3.5* erhaltenen Nitrilkautschuke Kautschukmischungen hergestellt. Hierfür wurde ein Innenmischer mit 1,5 1 Innenvolumen (GK 1,5 der Firma Werner & Pfleiderer, Stuttgart) mit ineinandergreifenden Knetelementen (PS 5A - Schaufelgeometrie) eingesetzt.

Die einzelnen Mischungsbestandteile wurden in der in der **Tabelle 7** angegebenen Reihenfolge in den Innenmischer gegeben. Sämtliche Mischungsbestandteile sind auf 100 Gew.-Teile des Nitrilkautschuks bezogen.

**Tabelle 7: Zusammensetzung der Kautschukmischungen**

| Mischungsbestandteile | Menge in Gew.-Teilen |
|---|---|
| NBR | 100,0 |
| Stearinsäure | 2,0 |
| Zinkoxid | 5,0 |
| Ruß N 330 | 40,0 |
| Phenol/Formaldehyd-Harz (Plastikator® FH) | 5,0 |
| N-Cycloheayl-benzthiazylsulfenamid (Vulkacit® CZ, Lanxess Deutschland GmbH) | 0,9 |
| Schwefel | 1,5 |

Die an diesen Mischungen bestimmten Eigenschaften sind in **Tabelle 8** zusammengefasst.

Tabelle 8: Eigenschaften der Nitrilkautschuke aus den nicht erfindungsgemäßen Beispielen 2.1-2.5 sowie den erfindungsgemäßen Beispielen 3.1*-3.5*

| Beispiel | Salzart | Trocknung | | Vulkanox® KB-Gehalt (NBR) [Gew.%] | Vulkanisation | | | | Vulkanisateigenschaften | | |
|---|---|---|---|---|---|---|---|---|---|---|---|
| | | VTS | FB | | MS5 (120°C) [min] | $t_{10}$ [sec] | t90 [sec] | $t_{90}$-$t_{10}$ [sec] | $\sigma_{300}$ [MPa] | $\sigma_{max.}$ [MPa] | $\varepsilon_b$ [%] |
| 2.1 | NaCl | X | - | 0,9 | 48 | 7,3 | 13,3 | 6,0 | 8,4 | 22,7 | 578 |
| 2.2 | NaCl | X | - | 1,16 | 47 | 7,0 | 12,3 | 5,3 | 8,1 | 21,9 | 577 |
| 2.3 | NaCl | X | - | 1,48 | 45 | 6,9 | 12,8 | 5,9 | 8,2 | 22,1 | 598 |
| 2.4 | $MgCl_2$ | X | - | 1,20 | 45 | 7,2 | 13,5 | 6,3 | 8,2 | 22,6 | 591 |
| 2.5 | $MgCl_2$ | X | - | 1,58 | 44 | 6,8 | 13,3 | 6,5 | 8,1 | 22,2 | 589 |
| 3.1 * | NaCl | - | X | 0,49 | 51 | 7,9 | 11,8 | 3,90 | 8,7 | 22,2 | 570 |
| 3.2* | NaCl | - | X | 0,59 | 49 | 7,6 | 11,4 | 3,8 | 8,9 | 22,8 | 570 |
| 3.3* | NaCl | - | X | 0,81 | 49 | 7,6 | 11,6 | 4,0 | 8,5 | 22,6 | 560 |
| 3.4* | $MgCl_2$ | - | X | 0,61 | 50 | 7,7 | 12,1 | 4,4 | 8,8 | 23,1 | 574 |
| 3.5* | $MgCl_2$ | - | X | 0,79 | 49 | 7,4 | 12,6 | 5,2 | 8,5 | 22,8 | 574 |

In **Tabelle 8** wird gezeigt, dass die **erfindungsgemäßen Nitrilkautschuke 3.1*, 3.2***, **3.3***, **3.4* und 3.5*** eine höhere Scorchsicherheit (größere MS 5-Werte), eine langsamere Anvulkanisation (größere t10-Werte), eine höhere Vulkanisationsgeschwindigkeit ($t_{90}$-$t_{10}$) sowie im vulkanisierten Zustand höhere Spannungswerte bei 300% Dehnung ($\sigma_{300}$) und vergleichbar gute Bruchdehnungen aufweisen. Durch diesen Vergleich werden die Vorteile der erfindungsgemäß hergestellten Nitrilkautschuke klar erkennbar.

Für einen direkten Nachweis des schädlichen Einflusses einer zu hohen Menge an 4-Methyl-2,6-*tert*-Butylphenol wurde ausgehend von dem erfindungsgemäßen Nitrilkautschuk 3.1* Vulkanox® KB in Mengen von 0,5 Gew.-Teilen **(Beispiel 4.1)** und 1,0 Gew.-Teilen **(Beispiel 5.1)** bei der Mischungsherstellung zugesetzt. Als Basismischung der Beispiele 4.1 und 5.1 wurde die in **Tabelle 7** angegebene Kautschukmischung verwendet. An den Kautschukmischungen 4.1 und 5.1 wurden der Mooneyscorch (MS 5), das Vulkanisationsverlaalten ($t_{10}$, $t_{90}$ und $t_{90}$-$t_{10}$) sowie die Vullcanisateigenschaften ($\sigma_{300}$, $\sigma_{max.}$ und $\varepsilon_b$) bestimmt **(Tabelle 9).**

**Tabelle 9: Einfluss von Vulkanox® KB-Zusätzen bei der Mischungsherstellung**

| Beispiel | Vulkanox® KB | | MS 5 (120°C) | Vulkanisation | | | Vulkanisateigenschaften | | |
|---|---|---|---|---|---|---|---|---|---|
| | im NBR [Gew.%] | Zusatz bei Mischungsherstellung [phr] | [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| 3.1 * | 0,49 | - | 51 | 7,9 | 11,8 | 3,90 | 8,7 | 22,2 | 570 |
| 4.1 | 0,49 | 0,5 | 48 | 7,2 | 12,8 | 5,8 | 8,2 | 22,1 | 592 |
| 5.1 | 0,4 | 1,0 | 45 | 6,7 | 13,5 | 6,8 | 7,8 | 22,5 | 575 |

* erfindungsgemäße Beispiele sind mit "*" gekennzeichnet

Wie man in **Tabelle 9** sieht, werden durch Zusätze von 0,5 bzw. 1,0 Gew.-Teilen Vulkanox® KB bezogen auf 100 Gew.-Teilen Nitrilkautschuk (phr) bei der Mischungsherstellung die Scorchzeiten (MS 5) sowie die Anvulkanisationszeiten ($t_{10}$) kürzer (geringere Verarbeitungssicherheit), die Vullcanisationszeiten ($t_{90}$-$t_{10}$) länger und damit schlechter sowie die Modulwerte bei 300 % Dehnung ($\sigma_{300}$) niedriger und damit schlechter.

## Patentansprüche

1. Nitrilkautschuk enthaltend mindestens ein substituiertes Phenol der allgemeinen Formel (I) in einer Menge im Bereich von 0,25 bis < 0,9 Gew.%, bezogen auf den Nitrilkautschuk

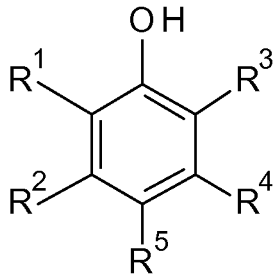

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff-Rest mit 1 bis 8 C-Atomen und zusätzlich einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist.

2. Nitrilkautschuk nach Anspruch 1 enthaltend mindestens ein substituiertes Phenol der allgemeinen Formel (I) in einer Menge im Bereich von 0,3 bis 0,85 Gew.%, bezogen auf den Nitrilkautschuk.

3. Nitrilkautschuk nach Anspruch 1 enthaltend mindestens ein substituiertes Phenol der allgemeinen Formel (I) in einer Menge im Bereich von 0,4 Gew.% bis 0,85 Gew.%, bezogen auf den Nitrilkautschuk.

4. **Nitrilkautschuk** nach einem der Ansprüche 1 bis 3, **dadurch gekennzeichnet, dass**

$R^1$, $R^2$, $R^3$, $R^4$ und $R^5$ gleich oder verschieden sind und Wasserstoff, Hydroxy, einen linearen oder verzweigten $C_1$-$C_8$ Alkylrest, besonders bevorzugt Methyl, Ethyl, Propyl, n-Butyl oder t-Butyl, einen linearen oder verzweigten $C_1$-$C_8$ Alkoxyrest, besonders bevorzugt Methoxy, Ethoxy oder Propoxy, einen $C_3$-$C_8$ Cycloalkylrest, besonders bevorzugt Cyclopentyl oder Cyclohexyl, oder einen Phenylrest darstellen, wobei mindestens einer der Reste $R^1$, $R^2$, $R^3$, $R^4$ und $R^5$ ungleich Wasserstoff ist.

5. **Nitrilkautschuk** nach Anspruch 4, **dadurch gekennzeichnet, dass** zwei oder drei der Reste $R^1$, $R^2$, $R^3$, $R^4$ und $R^5$ Wasserstoff bedeuten und die übrigen drei bzw. zwei der Reste $R^1$, $R^2$, $R^3$, $R^4$ und $R^5$ gleich oder verschieden sind und Hydroxy, einen linearen oder verzweigten $C_1$-$C_8$ Alkylrest, besonders bevorzugt Methyl, Ethyl, Propyl, n-Butyl oder t-Butyl, einen linearen oder verzweigten $C_1$-$C_8$ Alkoxyrest, besonders bevorzugt Methoxy, Ethoxy oder Propoxy, einen $C_3$-$C_8$ Cycloalkylrest, besonders bevorzugt Cyclopentyl oder Cyclohexyl, oder einen Phenylrest darstellen.

6. **Nitrilkautschuk** nach einem der Ansprüche 1 bis 3, **dadurch gekennzeichnet, dass** das mindestens eine substituierte Phenol der allgemeinen Formel (I) ausgewählt ist aus der Gruppe bestehend aus den im Folgenden genannten Verbindungen.

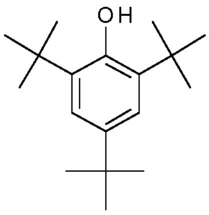, 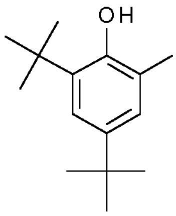, 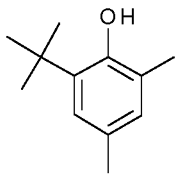, 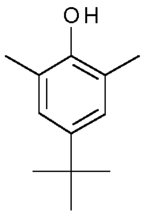, 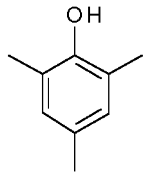,

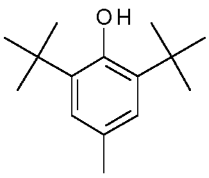, 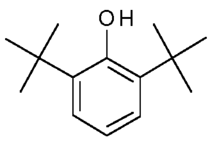, 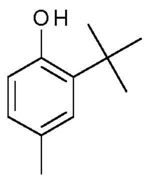, 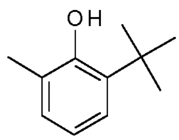, 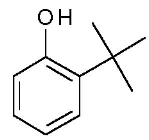,

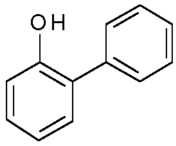, 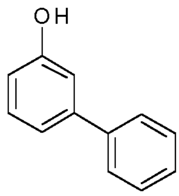, 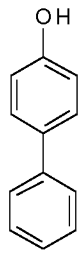,

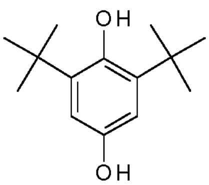, 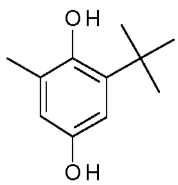, 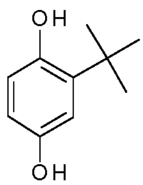, 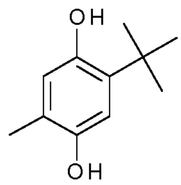, 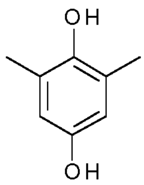,

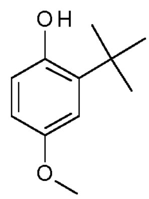 und 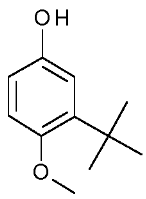

7. **Nitrilkautschuk** nach einem der Ansprüche 1 bis 6, **dadurch gekennzeichnet, dass** er Wiederholungseinheiten abgeleitet von mindestens Acrylnitril und 1,3-Butadien aufweist, bevorzugt entweder ausschließlich abgeleitet von Acrylnitril und 1,3-Butadien oder abgeleitet von Acrylnitril, 1,3-Butadien und einer oder mehreren $\alpha$,$\beta$-ungesättigten Mono- oder Dicarbonsäure(n), deren Estern oder Amiden aufweist, insbesondere ausschließlich abgeleitet von Acrylnitril und 1,3-Butadien oder abgeleitet von Acrylnitril, 1,3-Butadien und einem oder mehreren Alkylestern einer $\alpha$,$\beta$-ungesättigten Carbonsäure ausgewählt aus der Gruppe Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat und Lauryl(meth)acrylat.

8. **Nitrilkautschuk** nach einem der Ansprüche 1 bis 7, **dadurch gekennzeichnet, dass** die Lagerstabilität LS des Nitrilkautschuks definiert über

$$LS\ (48h/100°C) = MV1 - MV\ 0$$

wobei

MV0 die Mooney-Viskosität ML 1+4@ 100°C bestimmt nach ASTM D 1646 des Nitrilkautschuks bedeutet und MV2 die Mooney-Viskosität ML 1+4@ 100°C bestimmt nach ASTM D 1646 des gleichen Nitrilkautschuks nach 48stündiger Lagerung bei 100°C bedeutet und

einen Wert kleiner 5 aufweist.

9. **Verfahren zur Herstellung von Nitrilkautschuken** gemäß einem der Ansprüche 1 bis 8, **dadurch gekennzeichnet, dass** man

(1) den Nitrilkautschuk durch Emulsionspolymerisation mindestens eines konjugierten Diens, mindestens eines $\alpha,\beta$ ungesättigten Nitril und keinem, einem oder mehreren weiteren copolymerisierbaren Monomeren herstellt, die resultierende Suspension des Nitrilkautschuks im wässrigen Medium mit mindestens einem substituierten Phenol der allgemeinen Formel (I), bevorzugt in einer Menge im Bereich von 0,9 bis 1,6 Gew.% bezogen auf den Nitrilkautschuk versetzt,

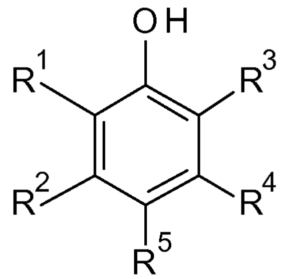

(I)

worin

$R^1$, $R^2$, $R^3$, $R^4$ und $R^5$ gleich oder verschieden sind und Wasserstoff, Hydroxy, einen linearen, verzweigten, cyclischen oder aromatischen Kohlenwasserstoff Rest mit 1 bis 8 C-Atomen und zusätzlich einem, zwei oder drei Heteroatomen, die vorzugsweise Sauerstoff sind, darstellen, wobei mindestens einer der Reste $R^1$, $R^2$, $R^3$, $R^4$ und $R^5$ ungleich Wasserstoff ist, und

(2) den Nitrilkautschuk koaguliert, isoliert und trocknet,
**dadurch gekennzeichnet, dass** die Trocknung bei einer Temperatur im Bereich von 100 bis 180°C, vorzugsweise bei 110 bis 150°C durchgeführt wird und der Gehalt an substituiertem Phenol auf die Menge im Bereich von 0,4 Gew.% bis 0,85 Gew.% eingestellt wird.

10. **Vulkanisierbare Mischungen** enthaltend mindestens einen Nitrilkautschuk gemäß einem der Ansprüche 1 bis 8 und mindestens ein Venetzungssystem enthaltend mindestens einen Vernetzer und optional ein oder mehrere Vernetzungsbeschleuniger.

11. **Verfahren zur Herstellung von Vulkanisaten dadurch gekennzeichnet, dass** man eine vulkanisierbare Mischung gemäß Anspruch 10 vulkanisiert, bevorzugt im Rahmen eines Formgebungsverfahrens, bevorzugt bei einer Temperatur im Bereich von 100°C bis 200°C, besonders bevorzugt von 120°C bis 190°C und insbesondere bevorzugt von 130°C bis 180°C.

12. **Vulkanisate** erhältlich nach dem Verfahren gemäß Anspruch 11, bevorzugt in Form von Formkörpern, besonders bevorzugt in Form eines Riemens, von Walzenbelägen, einer Dichtung, einer Kappe, eines Stopfens, eines Schlauchs, von Bodenbelag, von Dichtungsmatten oder -platten, Profilen oder Membranen.

## Claims

1. **Nitrile rubber** containing at least one substituted phenol of the general formula (I) in an amount in the range from 0.25 to < 0.9% by weight, based on the nitrile rubber,

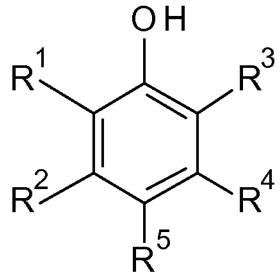

(I)

in which

$R^1$, $R^2$, $R^3$, $R^4$ and $R^5$ are the same or different and are each hydrogen, hydroxyl, a linear, branched, cyclic or aromatic hydrocarbyl radical having 1 to 8 carbon atoms and additionally one, two or three heteroatoms, which are preferably oxygen, where at least one of the $R^1$, $R^2$, $R^3$, $R^4$ and $R^5$ radicals is not hydrogen.

**2.** Nitrile rubber according to Claim 1 containing at least one substituted phenol of the general formula (I) in an amount in the range from 0.3 to 0.85% by weight, based on the nitrile rubber.

**3.** Nitrile rubber according to Claim 1 containing at least one substituted phenol of the general formula (I) in an amount in the range from 0.4% by weight to 0.85% by weight, based on the nitrile rubber.

**4. Nitrile rubber** according to any of Claims 1 to 3, **characterized in that**

$R^1$, $R^2$, $R^3$, $R^4$ and $R^5$ are the same or different and are each hydrogen, hydroxyl, a linear or branched $C_1$-$C_8$ alkyl radical, more preferably methyl, ethyl, propyl, n-butyl or t-butyl, a linear or branched $C_1$-$C_8$ alkoxy radical, more preferably methoxy, ethoxy or propoxy, a $C_3$-$C_8$ cycloalkyl radical, more preferably cyclopentyl or cyclohexyl, or a phenyl radical, where at least one of the $R^1$, $R^2$, $R^3$, $R^4$ and $R^5$ radicals is not hydrogen.

**5. Nitrile rubber** according to Claim 4, **characterized in that** two or three of the $R^1$, $R^2$, $R^3$, $R^4$ and $R^5$ radicals are hydrogen and the other three or two of the $R^1$, $R^2$, $R^3$, $R^4$ and $R^5$ radicals are the same or different and are each hydroxyl, a linear or branched $C_1$-$C_8$ alkyl radical, more preferably methyl, ethyl, propyl, n-butyl or t-butyl, a linear or branched $C_1$-$C_8$ alkoxy radical, more preferably methoxy, ethoxy or propoxy, a $C_3$-$C_8$ cycloalkyl radical, more preferably cyclopentyl or cyclohexyl, or a phenyl radical.

**6. Nitrile rubber** according to any of Claims 1 to 3, **characterized in that** the at least one substituted phenol of the general formula (I) is selected from the group consisting of the following compounds:

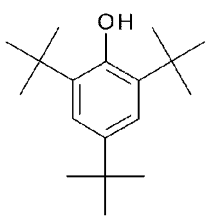 , 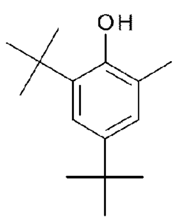 , 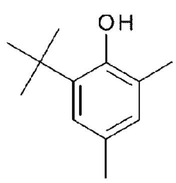 , 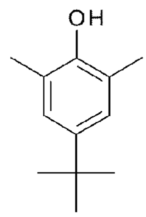 , 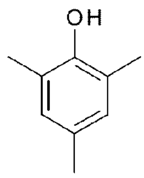 ,

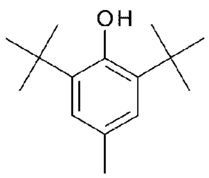, 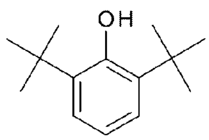, 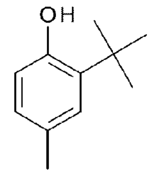, 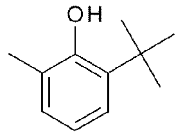, 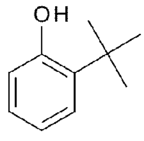,

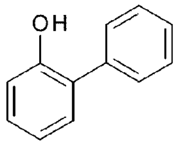, 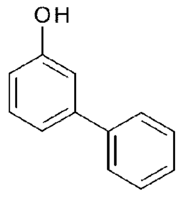, 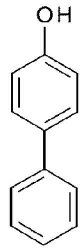,

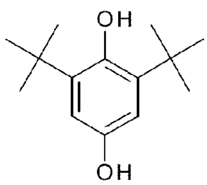, 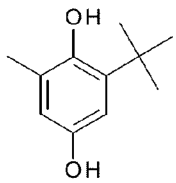, 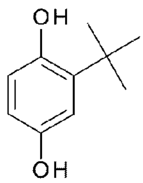, 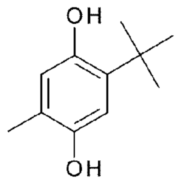, 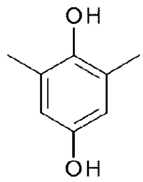

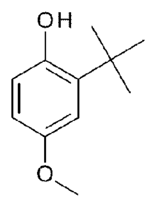 and 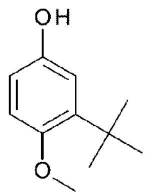

7. **Nitrile rubber** according to any of Claims 1 to 6, **characterized in that** it has repeat units derived from at least acrylonitrile and 1,3-butadiene, preferably either exclusively derived from acrylonitrile and 1,3-butadiene or derived from acrylonitrile, 1,3-butadiene and one or more α, β-unsaturated mono- or dicarboxylic acid(s), or esters or amides thereof, especially exclusively derived from acrylonitrile and 1,3-butadiene or derived from acrylonitrile, 1,3-butadiene and one or more alkyl esters of an α,β-unsaturated carboxylic acid selected from the group of methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate and lauryl (meth)acrylate.

8. **Nitrile rubber** according to any of Claims 1 to 7, **characterized in that** the storage stability SS of the nitrile rubber is defined by

$$SS\ (48\ h/100°C) = MV\ 1 - MV\ 0$$

where

MV0 is the Mooney viscosity ML 1+4@ 100°C determined to ASTM D 1646 of the nitrile rubber and
MV2 is the Mooney viscosity ML 1+4@ 100°C determined to ASTM D 1646 of the same nitrile rubber after storage at 100°C for 48 hours and has a value of less than 5.

9. **Process for producing nitrile rubbers** according to any of Claims 1 to 8, **characterized in that**

(1) the nitrile rubber is prepared by emulsion polymerization of at least one conjugated diene, at least one α,β-unsaturated nitrile and no further copolymerizable monomer or one or more further copolymerizable monomers, the resulting suspension of the nitrile rubber in an aqueous medium is admixed with at least one substituted phenol of the general formula (I), preferably in an amount in the 0.9 to 1.6% by weight, based on the nitrile rubber,

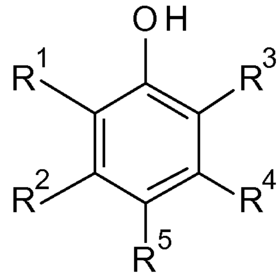

(I)

in which

$R^1$, $R^2$, $R^3$, $R^4$ and $R^5$ are the same or different and are each hydrogen, hydroxyl, a linear, branched, cyclic or aromatic hydrocarbyl radical having 1 to 8 carbon atoms and additionally one, two or three heteroatoms, which are preferably oxygen, where at least one of the $R^1$, $R^2$, $R^3$, $R^4$ and $R^5$ radicals is not hydrogen, and

(2) the nitrile rubber is coagulated, isolated and dried,

**characterized in that** the drying is effected at a temperature in the range from 100 to 180°C, preferably at 110 to 150°C, and the content of substituted phenol is adjusted to the amount in the range from 0.4% by weight to 0.85% by weight.

**10. Vulcanizable mixtures** comprising at least one nitrile rubber according to any of Claims 1 to 8 and at least one crosslinking system comprising at least one crosslinker and optionally one or more crosslinking accelerators.

**11. Process for producing vulcanizates, characterized in that** a vulcanizable mixture according to Claim 10 is vulcanized, preferably in the course of a shaping process, preferably at a temperature in the range from 100°C to 200°C, more preferably from 120°C to 190°C and especially preferably from 130°C to 180°C.

**12. Vulcanizates** obtainable by the process according to Claim 11, preferably in the form of shaped bodies, more preferably in the form of a drive belt, of roller coverings, of a seal, of a cap, of a stopper, of a hose, of floor covering, of sealing mats or sheets, profiles or membranes.

## Revendications

**1.** Caoutchouc de nitrile, contenant au moins un phénol substitué de formule générale (I) en une quantité dans la plage allant de 0,25 à < 0,9 % en poids, par rapport au caoutchouc de nitrile,

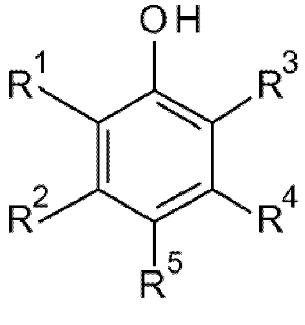

(I)

dans laquelle
$R^1$, $R^2$, $R^3$, $R^4$ et $R^5$ sont identiques ou différents, et représentent hydrogène, hydroxy, un radical hydrocarboné linéaire, ramifié, cyclique ou aromatique contenant 1 à 8 atomes C et en outre un, deux ou trois hétéroatomes, qui sont de préférence l'oxygène, au moins un des radicaux $R^1$, $R^2$, $R^3$, $R^4$ et $R^5$ étant différent de l'hydrogène.

**2.** Caoutchouc de nitrile selon la revendication 1, contenant au moins un phénol substitué de formule générale (I) en une quantité dans la plage allant de 0,3 à 0,85 % en poids, par rapport au caoutchouc de nitrile.

**3.** Caoutchouc de nitrile selon la revendication 1, contenant au moins un phénol substitué de formule générale (I) en une quantité dans la plage allant de 0,4 % en poids à 0,85 % en poids, par rapport au caoutchouc de nitrile.

**4.** Caoutchouc de nitrile selon l'une quelconque des revendications 1 à 3, **caractérisé en ce que** $R^1$, $R^2$, $R^3$, $R^4$ et $R^5$ sont identiques ou différents, et représentent hydrogène, hydroxy, un radical alkyle en $C_1$-$C_8$ linéaire ou ramifié, de manière particulièrement préférée méthyle, éthyle, propyle, n-butyle ou t-butyle, un radical alcoxy en $C_1$-$C_8$ linéaire ou ramifié, de manière particulièrement préférée méthoxy, éthoxy ou propoxy, un radical cycloalkyle en $C_3$-$C_8$, de manière particulièrement préférée cyclopentyle ou cyclohexyle, ou un radical phényle, au moins un des radicaux $R^1$, $R^2$, $R^3$, $R^4$ et $R^5$ étant différent de l'hydrogène.

**5.** Caoutchouc de nitrile selon la revendication 4, **caractérisé en ce que** deux ou trois des radicaux $R^1$, $R^2$, $R^3$, $R^4$ et $R^5$ signifient l'hydrogène et les trois ou deux autres radicaux $R^1$, $R^2$, $R^3$, $R^4$ et $R^5$ sont identiques ou différents, et représentent hydroxy, un radical alkyle en $C_1$-$C_8$ linéaire ou ramifié, de manière particulièrement préférée méthyle, éthyle, propyle, n-butyle ou t-butyle, un radical alcoxy en $C_1$-$C_8$ linéaire ou ramifié, de manière particulièrement préférée méthoxy, éthoxy ou propoxy, un radical cycloalkyle en $C_3$-$C_8$, de manière particulièrement préférée cyclopentyle ou cyclohexyle, ou un radical phényle.

**6.** Caoutchouc de nitrile selon l'une quelconque des revendications 1 à 3, **caractérisé en ce que** ledit au moins un phénol substitué de formule générale (I) est choisi dans le groupe constitué par les composés cités ci-après :

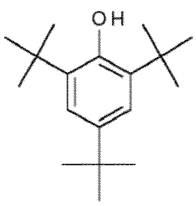 , 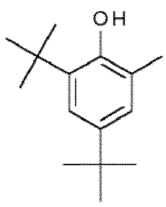 , 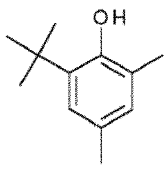 , 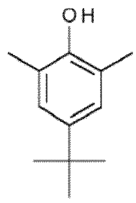 , 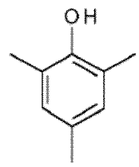 ,

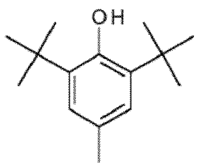 , 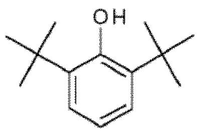 , 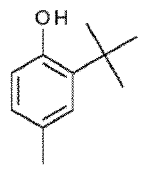 , 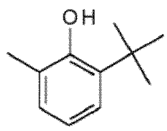 , 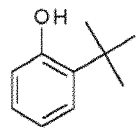 ,

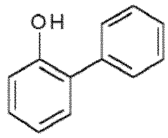 , 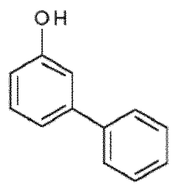 , 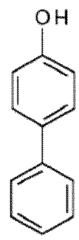 ,

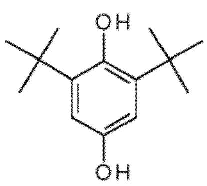 , 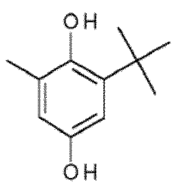 , 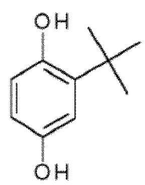 , 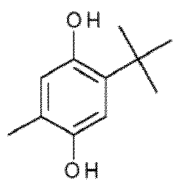 , 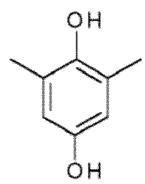 ,

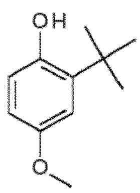 et 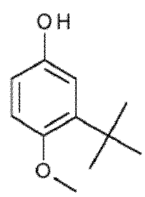 .

**7.** Caoutchouc de nitrile selon l'une quelconque des revendications 1 à 6, **caractérisé en ce qu'**il comprend des unités de répétition dérivées au moins d'acrylonitrile et de 1,3-butadiène, de préférence soit exclusivement dérivées d'acrylonitrile et de 1,3-butadiène, soit dérivées d'acrylonitrile, de 1,3-butadiène et d'un ou de plusieurs acides mono- ou dicarboxyliques $\alpha,\beta$-insaturés, leurs esters ou amides, notamment exclusivement dérivées d'acrylonitrile et de 1,3-butadiène, ou dérivées d'acrylonitrile, de 1,3-butadiène et d'un ou de plusieurs esters alkyliques d'un acide carboxylique $\alpha,\beta$-insaturé choisi dans le groupe constitué par le (méth)acrylate de méthyle, le (méth)acrylate d'éthyle, le (méth)acrylate de propyle, le (méth)acrylate de n-butyle, le (méth)acrylate de t-butyle, le (méth)acrylate d'hexyle, le (méth)acrylate de 2-éthylhexyle, le (méth)acrylate d'octyle et le (méth)acrylate de lauryle.

**8.** Caoutchouc de nitrile selon l'une quelconque des revendications 1 à 7, **caractérisé en ce que** la stabilité au stockage LS du caoutchouc de nitrile est définie par :

$$LS\ (48\ h/100\ °C) = MV1 - MV0$$

MV0 signifiant la viscosité de Mooney ML 1+4 @ 100 °C déterminée selon ASTM D 1646 du caoutchouc de nitrile, et
MV2 signifiant la viscosité de Mooney ML 1+4 @ 100 °C déterminée selon ASTM D 1646 du même caoutchouc de nitrile après 48 h de stockage à 100 °C, et
présente une valeur inférieure à 5.

**9.** Procédé de fabrication de caoutchoucs de nitrile selon l'une quelconque des revendications 1 à 8, **caractérisé en ce que**

(1) le caoutchouc de nitrile est fabriqué par polymérisation en émulsion d'au moins un diène conjugué, d'au moins un nitrile $\alpha,\beta$-insaturé et d'aucun, d'un ou de plusieurs autres monomères copolymérisables, la suspension résultante du caoutchouc de nitrile est mélangée dans un milieu aqueux avec au moins un phénol substitué de formule générale (I), de préférence en une quantité dans la plage allant de 0,9 à 1,6 % en poids, par rapport au caoutchouc de nitrile,

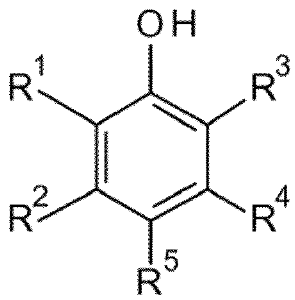

(I)

dans laquelle
$R^1$, $R^2$, $R^3$, $R^4$ et $R^5$ sont identiques ou différents, et représentent hydrogène, hydroxy, un radical hydrocarboné linéaire, ramifié, cyclique ou aromatique contenant 1 à 8 atomes C et en outre un, deux ou trois hétéroatomes, qui sont de préférence l'oxygène, au moins un des radicaux $R^1$, $R^2$, $R^3$, $R^4$ et $R^5$ étant différent de l'hydrogène.
(2) le caoutchouc de nitrile est coagulé, isolé et séché,

**caractérisé en ce que** le séchage est réalisé à une température dans la plage allant de 100 à 180 °C, de préférence de 110 à 150 °C, et la teneur en phénol substitué est ajustée à une quantité dans la plage allant de 0,4 % en poids à 0,85 % en poids.

**10.** Mélanges vulcanisables contenant au moins un caoutchouc de nitrile selon l'une quelconque des revendications 1 à 8 et au moins un système de réticulation contenant au moins un agent de réticulation et éventuellement un ou plusieurs accélérateurs de réticulation.

**11.** Procédé de fabrication de vulcanisats, **caractérisé en ce qu'**un mélange vulcanisable selon la revendication 10 est vulcanisé, de préférence dans le cadre d'un procédé de façonnage, de préférence à une température dans la

plage allant de 100 °C à 200 °C, de manière particulièrement préférée de 120 °C à 190 °C, et de manière notamment préférée de 130 °C à 180 °C.

**12.** Vulcanisats pouvant être obtenus par le procédé selon la revendication 11, de préférence sous la forme de corps moulés, de manière particulièrement préférée sous la forme d'une courroie, de revêtements de cylindres, d'un joint, d'un capuchon, d'un bouchon, d'un tuyau, d'un revêtement de sol, de mats ou de plaques d'étanchéité, de profilés ou de membranes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2281613 A
- US 2434536 A
- GB 888040 A
- DD 154702
- DE 2332096 A
- DE 2425441 A
- DE 2751786 A
- DE OS2751786 A
- DE 3043688 A
- US 2487263 A
- US 4383108 A
- US 5708132 A
- US 4920176 A
- EP 1369436 A
- US 4965323 A
- EP 0692496 A
- EP 0779301 A
- EP 0779300 A
- DE 102007024011 A
- DE 102007024011
- DE 102007024008 A
- DE 102007024008
- DE 102007024010
- EP 2238177 A
- EP 2238175 A
- EP 2238176 A
- EP 1331074 A
- DE 2150639 A
- DE 3337567 A1
- JP 7316126 A
- JP 7316127 A
- JP 7316128 A
- GB 823823 A
- GB 823824 A
- DE 102007024009
- WO 9701597 A
- US 4857571 A
- US 4826721 A


### In der Beschreibung aufgeführte Nicht-Patentliteratur


- **W. HOFMANN.** *Rubber Chem. Technol.,* 1963, vol. 36, 1
- Ullmann's Encyclopedia of Industrial Chemistry. VCH Verlagsgesellschaft, 1993, 255-261
- *Kolloid-Z.,* 1957, vol. 154, 154
- **HOUBEN-WEYL.** Methoden der Org. Chemie. *Makromolekulare Stoffe,* 1961, vol. 1, 484
- **ROUBEN-WEYL.** Methoden der Org. Chemie. *Makromolekulare Stoffe,* 1961, vol. 1, 479
- Ullmann's Encyclopedia of Industrial Chemistry. vol. 31, 345-355
- Ullmann's Encyclopedia of Industrial Chemistry. vol. 13, 75-108
- **URANECK, C. A.** Molecular weight control of elastomers prepared by emulsion polymerization. *Rubber Chemistry and Technology,* 1976, vol. 49 (3), 610-49
- Emulsion Polymerization. **D. C. BLACKLEY.** Theory and Practice. Applied Science Publishers Ltd London, 1975, 329-381
- **W. HOFMANN.** *Rubber Chem. Technol.,* 1963, vol. 36
- **B. WELZ.** Atomic Absorption Spectrometry. Verlag Chemie, 1985